# EUROPÄISCHE PATENTSCHRIFT

(11) **EP 1 126 965 B1**
(45) Veröffentlichungstag und Bekanntmachung des Hinweises auf die Patenterteilung: **03.09.2003**
(21) Anmeldenummer: 99971759.8
(22) Anmeldetag: 03.11.1999
(51) Int. Cl.: B29C 53/00

(54) **VERFAHREN UND VORRICHTUNG ZUR HERSTELLUNG EINSTÜCKIG AUSGEBILDETER, DRIEDIMENSIONALER FORMKÖRPER, NACH DEM VERFAHREN HERGESTELLTE FORMKÖRPER SOWIE DISPLAYMÖBEL**
METHOD FOR PRODUCING ONE-PIECE, THREE-DIMENSIONAL SHAPED BODIES, SHAPED BODIES PRODUCED ACCORDING TO THE METHOD, DEVICE FOR CARRYING OUT THE METHOD, AND DISPLAY FURNITURE
PROCEDE DE PRODUCTION DE CORPS FA ONNES MONOBLOCS TRIDIMENSIONNELS, CORPS FA ONNES PRODUITS SELON CE PROCEDE, DISPOSITIF POUR LA MISE EN OEUVRE DE CE PROCEDE, ET MEUBLE DE PRESENTATION

(30) Priorität: 05.11.1998 DE 19851040; 05.11.1998 DE 29819802 U
(43) Veröffentlichungstag der Anmeldung: 29.08.2001
(73) Patentinhaber: WOLF-DIETRICH HANNECKE KUNSTSTOFFTECHNIK, D-37154 Northeim (DE)
(72) Erfinder: HANNECKE, Wolf-Dietrich, D-37154 Northeim (DE)
(74) Vertreter: Skora, Michael
(86) Internationale Anmeldenummer: EP9908409
(87) Internationale Veröffentlichungsnummer: WO00027613

(56) Entgegenhaltungen:
- EP-A- 0 442 730
- DE-A- 3 420 447
- DE-A- 3 637 436
- DE-A- 3 719 654
- DE-U- 7 801 739
- DE-U- 8 616 891
- FR-A- 1 557 675
- FR-A- 2 282 982
- FR-A- 2 669 261
- FR-A- 2 700 728
- GB-A- 1 603 489
- US-A- 4 160 570
- US-A- 4 255 001

## Beschreibung

Die Erfindung betrifft ein Verfahren zur Herstellung einstückig ausgebildeter, dreidimensionaler Formkörper, nach dem Verfahren hergestellte Formkörper sowie eine Vorrichtung zur Durchführung des Verfahrens.

In fast allen Feldern der Technik werden seit jeher einstükkige, industriell oder handwerklich vorgefertigte und aus unterschiedlichsten Materialien bestehende Formkörper eingesetzt. Derartige Formkörper können funktions- bzw. gebrauchstüchtige Einzelgegenstände oder auch Bau- resp. Konstruktionselemente für mehr oder minder komplex strukturierte Ein- oder Vorrichtungen sein. Gerade in jüngster Zeit gelten die Bestrebungen der Ingenieure wieder vermehrt der Entwicklung modularer Systeme, bei denen komplexe Ein- bzw. Vorrichtungen aus einzelnen, möglichst universell verwendbaren Formkörpern zusammengesetzt werden und wobei die Zahl unterschiedlich ausgebildeter Formkörper resp. Module möglichst klein gehalten werden soll. Man möchte dadurch in erster Linie erreichen, daß sowohl die Anzahl spezifischer und aufwendiger Formgebungsprozesse als auch der Aufwand für Lagerhaltung und Teileversorgung reduziert wird.

Fertige Formkörper können das direkte Resultat diverser Urformprozesse sein, bei denen definitionsgemäß aus einem formlosen Stoff durch Schaffen eines Zusammenhalts ein fester Körper geformt wird. Eine andere Möglichkeit zu einem bestimmten Formkörper zu gelangen besteht darin, daß auf dem Wege der Umformung geschaffene Halbzeuge mittels verschiedener Verfahren umgeformt werden. Zu den letztgenannten Verfahren gehört auch die Biegeumformung von flachen, plattenförmig ausgebildeten Werkstücken. Je nach Art und Querschnitt des verwendeten Ausgangsmaterials und in Abhängigkeit vom zu erzielenden Biegeradius wird kalt- oder warmumgeformt. Beispielsweise werden Biegeformteile aus thermoplastischem Kunststoff aufgrund ihrer Biegefestigkeit im erkalteten Zustand im allgemeinen auf dem Wege der Warmumformung in einem Gesenk gewonnen.

Fertige Formkörper für die im Markt ein Bedarf besteht, sind insbesondere Displaymöbel zur verkaufsfördernden Präsentation von Waren, Abdeckhauben zur Abdeckung von Displayflächen eines Displaymöbels und Füße zur Halterung eines Pfostens eines Displaymöbels.

Aus der Praxis sind vielfältige Formen von Displaymöbeln bekannt, deren Herstellung jedoch im allgemeinen verschiedene Trenn-, Umform- und Fügeschritte umfaßt. Dadurch ist die Herstellung der bekannten Displaymöbel material- und zeitaufwendig.

Aus GB 1 603 489 ist es ferner bekannt, aus einem thermoplastischen Materialzuschnitt durch zonenweises Erwärmen und Biegen entlang von durch Lehren vorgegebenen Kanten ein Faltboot oder andere dreidimensionale Objekte zu erstellen. Das Verfahren ist gleichlautend in DE 28 22 218 A1 offenbart. Ferner ist es aus EP 0 022 884 A1 bekannt, einen dreidimensionalen Körper durch Verformen einer Metallbahn zu erstellen. Weder die EP 0 022 884 A1 noch die GB 1 603 489 lassen jedoch erkennen, wie ein Displaymöbel zur verkaufsfördernden Präsentation von Waren zu gestalten wäre.

Aus FR 2 669 261 A1 ist eine Warmkantbank bekannt, mit welcher an zwei voneinander unabhängigen Kanten zwei Abkantungen gleichzeitig durchgeführt werden können.

DE 34 20 447 A1 beschreibt einen Prospektständer, welcher aus einem einzigen Platinenzuschnitt zurechtgebogen werden kann.

In DE 37 19 654 A1 ist ferner eine schienengeführte Displayanlage beschrieben.

Die nachstehenden Ausführungen zum Stand der Technik beziehen sich auf Formkörper aus thermoplastischem Kunststoff und Verfahren zu deren Herstellung. Die aufzuzeigenden Probleme und Nachteile lassen sich sinngemäß jedoch auf alle Biegeformteile aus durch Wärmeeinwirkung verformbaren Werkstoffen und die entsprechenden zugrundeliegenden Umformverfahren übertragen.

Aus thermoplastischen Kunststoffen hergestellte Formkörper sind aufgrund ihrer Materialeigenschaften äußerst yielseitig einsetzbar. Unter weiter zunehmender Verdrängung der klassischen Werkstoffe wie etwa Holz oder Metall werden sowohl einfache als auch kompliziert ausgebildete Formkörper aus thermoplastischen Kunststoffen gefertigt. In ähnlicher Weise wie das Einsatzspektrum hat auch die Formenvielfalt in einem unüberschaubarem Maße zugenommen. Gleichwohl findet man unter den einteiligen Formkörpern aus thermoplastischem Kunststoff nur selten übergroß dimensionierte und hohlkörper- bzw. gefäßartig geformte Gebilde, wenn man einmal von langgestreckten und hohlen Strangprofilen wie etwa Rohrleitungsteilen absieht. Wie die nachfolgenden Ausführungen zeigen werden, ist die Ursache für diesen Umstand im wesentlichen darin zu suchen, daß die bekannten Verfahren für die Kleinserien-Herstellung von auf bestimmte Weise geometrisch ausgebildeten Formkörpern ungeeignet sind.

Zur Herstellung von Thermoplasten-Formkörpern bedient man sich je nach der zu erzielenden Raumform und des in Frage kommenden Halbzeugs bzw. Ausgangsmaterials unterschiedlicher Verfahren. Neben den bekannten Urformverfahren, zu denen die Herstellung, extrudierter Endlosprofile, die weitverbreitete Spritzgußtechnik oder auch die weiterentwickelte Spritzblastechnik gehören, sind zahlreiche Umformverfahren bekannt. Letztere lassen sich nach der Art der umzuformenden Ausgangsmaterialien differenzieren. Die nachstehenden Ausführungen zum Stand der Technik sind auf die bekannten warmformenden Verarbeitungsarten thermoplastischer Platten beschränkt.

Ein verhältnismäßig einfaches Verfahren zur Herstellung gleichfalls einfach ausgebildeter Biegeformteile aus thermoplastischem Kunststoff betrifft das im wesentlichen handwerkliche Warmformverfahren mit Hilfe einer Glühdrahtvorrichtung bzw. einer sogenannten Abkantbank. Hierbei wird eine Platte aus thermoplastischem Kunststoff längs einer geradlinig verlaufenden Erhitzungszone einer Biege-, Knickoder Faltlinie rasch und gleichmäßig auf die Temperatur optimalen thermoplastischen Verhaltens aufgeheizt und anschließend unter Zuhilfenahme mechanischer Kräfte längs der erhitzten Biege-, Knick- oder Faltlinie bis zur Erlangung eines erwünschten Winkels umgebogen, umgeknickt oder gefaltet. Durch Abkühlung fixiert sich die neue Form von selbst. Die zur Durchführung des Verfahrens verwendeten Vorrichtungen bestehen in der Regel aus einer die Biegelinie abbildenden Haltevorrichtung für das zu verformende Werkstück und einem darunter angeordneten linear verlaufenden Heizdraht bzw. einer linear verlaufenden Heizschiene. Ein aus einer thermoplastischen Platte erzeugtes Winkelstück kann beispielsweise zum Erhalt eines endlichen U- oder Treppenprofils weiteren Arbeitsgängen auf der Abkantbank unterzogen werden. Der Vorteil des Verfahrens besteht darin, daß zwar eine Abkantbank erforderlich ist, nicht jedoch die Form exakt abbildende Formwerkzeuge benötigt werden und daß das umzuformende Werkstück lediglich einer geradlinigen Teilerwärmung unterzogen werden braucht.

Es ist einleuchtend, daß die Formenvielfalt von auf diese Weise erzeugten Formkörpern begrenzt ist. Beispielsweise ist es nicht möglich, einfache Behältnisse herzustellen, ohne in einem nachgeschalteten Arbeitsgang und gegebenenfalls unter Einschluß spanender Zwischenbearbeitung die mittels einer Glühdrahtvorrichtung erzeugten Halbzeuge zu verkleben oder zu verschweißen. Eine mit einem Glühdraht arbeitende Vorrichtung und ein darauf abgestimmtes Verfahren sind aus DE 1 038 749 A1 bekannt. Die Nachteile dieser Vorgehensweise bestehen nicht zuletzt darin, daß Nahtstellen mit zuweilen unerwünschten oder schwer kalkulierbaren Materialeigenschaften entstehen. Wenn Formkörper aus transparentem Kunststoff etwa durch Verklebung oder Verschweißung miteinander verbunden werden, so wird außerdem das ästhetische Erscheinungsbild des auf diese Weise erhaltenen Körpers beeinträchtigt, da es im Bereich der Nahtstellen zu unregelmäßigen, zuweilen starken Lichtbrechungen kommt.

Derartige Nachteile lassen sich bislang nur vermeiden, wenn komplizierte Raumformen (z.B. Behältnisse oder dergleichen) unter Anwendung weitaus aufwendigerer Verfahren hergestellt werden. Zu diesen Verfahren gehören die mit Über- oder Unterdurck arbeitenden Blas- bzw. Saugverfahren, mittels derer ganzflächig zu erhitzende Thermoplastenplatten in einer Form zu schalen- bzw. kuppelartigen Teilen umgeformt werden können. Da die Herstellung von Formwerkzeugen teuer ist, lohnt eine Herstellung von Formkörpern über diesen Weg nur bei größeren Serien.

Ein Nachteil, der alle Verfahren betrifft, bei denen flächig erhitzte Platten verformt werden, besteht darin, daß die gesamte zu verformende Fläche auf Verarbeitungstemperatur erhitzt werden muß, gleichgültig ob eine bereits beim Halbzeug vorhandene Form bzw. Oberfläche teilweise auch für das spätere Formkörper nutzbar ist oder nicht. Das betrifft vornehmlich den Fall, wenn aus thermoplastischem Kunststoff vorgefertigte Platten als Ausgangsmaterial verwendet und mit Hilfe des Vakuumformverfahrens verformt werden. Aus großflächiger Erhitzung und Verformung resultiert zudem fast immer eine reduzierte Wandstärke an vielen Stellen des erzeugten Formkörpers. Diesem Umstand muß bei jeder neuen Form spezifisch Rechnung getragen werden.

Aus GB 1 603 489 ist ein Verfahren bekannt, bei dem aus einem thermoplastischen Materialzuschnitt durch lediglich zonenweises Erwärmen und Biegen entlang von durch Lehren vorgegebenen Kanten ein Faltboot oder andere dreidimensionale Objekte erstellt werden. Das Verfahren ist gleichlautend in DE 28 22 218 A1 offenbart. Ferner ist aus EP 0 022 884 A1 bekannt, einen dreidimensionalen Körper durch Verformen einer Metallbahn in einer Lehre zu erstellen.

Der Erfindung liegt die Aufgabe zugrunde, die Herstellung einstückig ausgebildeter, dreidimensionaler Formkörper zu vereinfachen und einfach herstellbare dreidimensionale Formkörper zur Verfügung zu stellen.

Die Lösung dieser Aufgabe erfolgt erfindungsgemäß mit den Merkmalen der Ansprüche 1, 14, bzw. 32.

Gemäß der Erfindung ist vorgesehen, eine bei Raumtemperatur biegesteife Platte lediglich in Erwärmungsbereichen entlang von Umformlinien, insbesondere Biegelinien, zu erwärmen und dann frei im Raum, das heißt ohne Anschlagkante, Lehre oder Gesenk umzuformen. Da das freie Umformen, insbesondere das Biegen ein Gesenk oder eine Lehre nicht erfordert, ist es auch für Kleinserien geeignet. Ein Vorteil des freien Umformens ist dabei, daß das Material schonend behandelt wird, da ein Werkzeugansatz nur in den Bereichen erfolgt, in denen das Material seine bei Raumtemperatur widerstandsfähigen Eigenschaften aufweist, so daß sich an dem Endprodukt keine Werkzeugeinwirkungen abzeichnen. Durch dieses freie Umformen im Raum, bei dem das Material eine Geometrie mit der geringsten inneren Spannung einnimmt, sind in einem Umformschritt auch Formen mit mehreren Biegelinien erzeugbar.

Bei dem erfindungsgemäßen Verfahren, das an das Origami-Falten erinnert, wird der Materialzuschnitt in Verformungsbereichen durch Erwärmen lediglich erweicht. Anschließend erfolgt das Falten durch Krafteinwirkung auf einzelne Abschnitte des Materialzuschnitts und die durch das Falten erzielte Raumform wird solange festgehalten, bis der Materialzuschnitt in den Erwärmungsbereichen wieder erkaltet und formstabil geworden ist. Es sei an dieser Stelle erwähnt, daß ein Kraftangriff nicht an allen Teilflächen erfolgen muß, da durch den Materialzusammenhalt auch Teilflächen in ihrer räumlichen Zuordnung zu anderen Teilflächen verändert werden können, an denen ein Kraftangriff nicht erfolgt.

Das freie Biegen im Raum entlang mehrerer Biegelinien in einem Arbeitsschritt ist eine bevorzugte Ausführungsform der Erfindung. Dabei können sich die Biegelinien auf dem Materialzuschnitt berühren, schneiden oder völlig unabhängig voneinander verlaufen, wobei auch gekrümmte Biegelinien zur Erzeugung einer bestimmten Raumform Anwendung finden können.

Wenn die Biegelinien einen gekrümmten Verlauf aufweisen, entstehen Formkörper mit gewölbten Flächen, die eine hohe Formstabilität aufweisen. Je häufiger sich dabei Sekanten der Biegelinien innerhalb einer definierten Arbeitsfläche schneiden und je weiter verstreut diese Schnittpunkte auf der Arbeitsfläche sind, bzw. je größer der mit Schnittpunkten bedeckte Anteil der Arbeitsfläche ist, desto formstabiler und vielfältiger belastbar wird der resultierende Formkörper im Allgemeinen sein. Diese Tatsache läßt sich in idealer Weise dazu nutzen, extrem belastbare Formkörper bei gleichzeitig niedrigem Gewicht und eo ipso geringem Fertigungsaufwand zu konstruieren. Bedingt durch die außerordentliche Formenvielfalt der erfindungsgemäßen Formkörper ergeben sich natürlich auch entsprechend zahlreiche spezifische Vorteile einzeln herausgegriffener Formbeispiele. Weitere übergreifende Vorzüge der erfindungsgemäßen Formkörper sowie des Verfahrens zur deren Herstellung bestehen darin, daß überall dort, wo in der Vergangenheit konventionelle Biegeformteile oder Halbzeuge mittels zeitaufwendiger handwerklicher Arbeitsprozesse verschraubt, verklebt oder verschweißt werden mußten, derartige Arbeiten in Zukunft vielfach dadurch eingespart werden können, daß kompliziertere Bauformen als fertige, einstückige Formkörper ohne großen Fertigungsaufwand gemäß der Erfindung gefertigt und verwendet werden. Nach dem Verfahren gemäß der Erfindung herstellte Behälter weisen zudem den Vorteil auf, daß sie flüssigkeitsdicht sind, ohne ein Verschweißen zu erfordern. Die Geometrie des fertigen Formkörpers ist dabei im wesentlichen von den Materialeigenschaften der thermoplastischen Platte, dem Verlauf und der Anordnung der Verformungskurven, dem Biegeradius in jedem Punkt der Verformungskurve sowie von der Breite der Erwärmungszone, der Heiztemperatur und der Heizdauer abhängig.

Wie bereits angedeutet wurde, beschränken sich die Vorteile der Erfindung nicht allein auf den technischen und ästhetischen Wert der erfindungsgemäßen Biegeformteile. Entscheidende Vorzüge betreffen auch das Verfahren zu ihrer Herstellung. Wie ebenfalls schon aufgezeigt wurde, spielen biegende Umformprozesse bislang eine eher untergeordnete Rolle im Rahmen der handwerklichen Verarbeitung thermoplastischer Halbzeuge. Die erfindungsgemäßen Biegeformteile sind jedoch in vielen Fallen geeignet, Formkörper aus thermoplastischem Material zu ersetzen, die das Resultat von technisch weitaus aufwendigeren, nichtbiegenden Formgebungsprozessen sind. Erfindungsgemäße Formkörper sind deshalb weitaus kostengünstiger und damit auch in kleinen Serien preiswert herstellbar als vergleichbare und mittels der genannten Urformverfahren erzeugte Formkörper, da zur Herstellung der erfindungsgemäßen Formkörper im Gegensatz zu den genannten Formverfahren gemäß dem Stand der Technik keine spezifischen Formwerkzeuge vonnöten sind und auch nicht die gesamte Halbzeugplatte auf Biegetemperatur erhitzt zu werden braucht. Der Kosten- und Zeitvorteil wirkt sich insbesondere bei großflächigen Platten aus.

Grundsätzlich sind als Ausgangsmaterial für die erfindungsgemäßen Formkörper und das Verfahren zu ihrer Herstellung all die Werkstoffe geeignet, die als Platten bzw. Flachkörper formbar sind und über thermoplastische Eigenschaften verfügen, so daß eine Verformbarkeit der Halbzeuge unter Wärmeeinwirkung gewährleistet ist. Dementsprechend können die Formkörper bzw. die nach dem erfindungsgemäßen Verfahren umzuformenden Platten entweder aus einen homogenen Material oder auch aus einem Verbundstoff bestehen. Eine exemplarische Aufzählung derartigen Materials umfaßt insbesondere thermoplastische Kunststoffe, Bleche, Flachglas, Wachs, Holz sowie diverse, unter Wärmeeinwirkung verformbare Verbundstoffe. Das bevorzugte Ausgangsmaterial besteht aus thermoplastischem Kunststoff jeglicher Art, wobei wiederum die Verbundstoffe auf der Basis thermoplastischer Kunststoffe ausdrücklich miteinzubeziehen sind. Gedacht ist hierbei beispielsweise an metall- oder glasfaserverstärkte Platten aus thermoplastischem Kunststoff oder etwa an Kunststoffe mit integriertem organischem Faseranteil.

Während man sich bei der warmformenden Biegung von Platten aus thermoplastischem Material seit jeher darauf beschränkt hat die Biegekanten entlang gerade verlaufender, nämlich linearer Verformungskurven anzulegen, konnte nunmehr herausgefunden werden, daß sich Platten aus thermoplastischem Material auch dann biegen lassen, wenn die Verformungskurven nicht linear verlaufen sondern beispielsweise einen Bogen oder etwa eine Zick-Zack-Linie beschreiben. Biegungen sind sogar dann möglich, wenn sich mehrere Verformungskurven innerhalb der umzuformenden Platte schneiden oder berühren. Die durch entsprechende Biegung von Platten mit sich schneidenden bzw. berührenden Verformungskurven erzielten Formkörper weisen Ecken bildende und zueinander im Winkel stehende Biegekanten auf.

Je nach Verlauf und Anordnung der einem spezifischem Formkörper zugrundeliegenden Verformungskurven kann man unterscheiden zwischen Formkörpern, bei denen die von der Erhitzung während der Umformung nicht betroffenen, spannungsfreien Flächen auch nach der Umformung eben und spannungsfrei sind, sowie zwischen Formkörpern, bei denen jene Flächen nach der Umformung einer Materialspannung unterliegen, die sich im Allgemeinen darin äußert, daß die betroffene Fläche eine erkennbare Wölbung aufweist. Materialspannungen bzw. Wölbungen in den von der thermischen Umformung nicht betroffenen Teilflächen der erfindungsgemäßen Formkörper ergeben sich immer dann, wenn eine derartige, wenigstens teilweise von einer oder mehreren Biegekanten begrenzte Teilfläche durch eben jene Biegekanten in eine kleinere Ebene gezwängt wird, als dem tatsächlichen Umfang der flach ausgebreiteten Teilfläche entsprechen wurde. Sollen die einzelnen Teilflächen eines erfindungsgemäßen Formkörpers von den angesprochenen Materialspannungen gänzlich frei sein, so läßt sich dies nur erreichen, wenn die einzelnen und sich in wenigstens einem Fall schneidenden Verformungskurven jeweils geradlinig verlaufen.

Sobald hingegen ein nicht von einer anderen Verformungskurve geschnittener Abschnitt einer Verformungskurve als endlich oder unendlich fein unterteilter Polygonzug verläuft, so erfährt die thermoplastische Platte nach Durchführung der Biegung auf beiden Seiten der entsprechenden, resultierenden Biegekante je eine mehr oder minder ausgeprägte Wölbung. Wenn der besagte Polygonzug einen einfachen Bogen beschreibt, so weist das resultierende Formkörper sowohl eine konvex begrenzte konkave als auch eine konkav begrenzte konvexe Teiloberfläche auf.

Setzt sich ein unendlich fein unterteilter Polygonzug aus zwei jweils entgegengesetzt verlaufenden Bogenzügen zusammen, so weisen die beiden von der resultierenden gekrümmten, beispielsweise als Tangens- oder Kotangenskurve verlaufenden Biegekante begrenzten Teiloberflächen jeweis fließend ineinander übergehende konkave und konvexe Abschnitte auf.

Bedingt durch die unterschiedliche Elastizität des jeweils verwendeten Ausgangsmaterials verlaufen die Mantellinien der konkav bzw. konvex gewölbten Flächen mehr oder minder stark gekrümmt, wobei sich der Krümmungsradius fortlaufend ändert. Dies bedeutet, daß die Wölbung einer jeweiligen Teilfläche in unmittelbarer Nähe der Biegekante noch deren Krümmungsradius wiederspiegelt, anschließend aber mit zunehmender Entfernung von der Biegekante fortlaufend abnimmt. Je geringer die durch die Material- und die Plattenstärke bedingte Elastizität ist, desto schneller verflacht die gewölbte Fläche.

Wenn aus ästhetischen oder technischen Gründen mit derartigen Wölbungen versehene Formkörper erwünscht sind, so weisen die gewölbten Biegeformteile gegenüber konventionellen, gewölbten Formkörpern gleicher Wandstärke den Vorzug einer erhöhten Stabilität auf, da das erfindungsgemäße Formkörper im Bereich der Wölbung permanent unter Vorspannung steht. Derartige in sich stabile, gewölbte Formkörper können in vielen Bereichen vorteilhaft eingesetzt werden. Exemplarisch seien an dieser Stelle Verwendungen im Karosseriebau oder auch in der Bau- respektive Bedachungstechnik genannt. Die erwähnten und in vielen Fällen infolge des Verlaufs und der Anordnung der Verformungskurven entstehenden Spannungskräfte führen nicht nur zu einer elastischen Kaltverformung der während der Biegeumformung unerhitzten Teilflächen sondern beeinflussen darüber hinaus auch unmittelbar die Warmverformung entlang der Verformungskurven. So können die wirkenden Spannungskräfte einen bestimmten Einfluß auf die Biegekanten haben, welcher seinerseits wiederum vom verwendeten Material, der gewählten Temperatur sowie der Breite der sich entlang einer Verformungskurve erstreckenden Erhitzungszone beeinflußt wird. Praktische Bedeutung hat in diesem Zusammenhang vor allem die gewählte Breite der Erhitzungszone, da allein durch die Verengung oder Verbreiterung dieser Zone eine spürbare Beeinflussung der geometrischen Form der Biegekanten erfolgt. Beispielsweise kann einer Biegekante durch eine innerhalb ein und derse-lben Verformungskurve variierende Breite der Erhitzungszone kann es dabei von Vorteil sein, wenn neben der eigentlichen Erhitzungszone eine zusätzliche Kühlung des Plattenmaterials erfolgt. Grundsätzlich werden die Ecken und Kanten eines Formkörpers automatisch um so stärker verrundet, je breiter die Erhitzungszone ist. Die Auswir-kungen der durch die elastisch kaltverformten Teilflächen verursachten Span-nungskräfte reichen von Stauchungen über Dehnungen bis hin zu Verscherungen im Bereich der Biegekanten und können den Anforderungskriterien an den fertigen Formkörper entsprechend bewußt vermieden oder aber auch gezielt hervorgerufen werden. Geschickt gelegte Stauchungen können beispielsweise zu erwünschten Verstärkungsrippen werden oder etwa als optisches Unterstreichungsmittel dienen. Mittels besonders starker Dehnungen können andererseits Falten erzeugt werden, die schließlich als U- oder Omegafalten in Erscheinung treten. Es versteht sich von selbst, daß derartige Verformungen an den Biegekanten auch dadurch erzeugt werden können, indem die erforderlichen Spannungskräfte durch auf die Außenränder des Halbzeugs ausgeübten Zug bzw. Druck während der Biegeumformung ausgelöst werden. Charakteristische Ausbildungen der Biegekanten können in besonders vorteilhafter Weise als integriert-funktionale Bestanteile von Formkörpern dienen. Beispielsweise können absichtlich herbeigeführte Materialstauchungen bzw. -dehnungen als Kabelkanal, als Abflußrinne, als Negativprofil für Schnapp- oder Stekkerverbindungen sowie als Einzugsprofil für Keder oder Dichtungsprofile fungieren.

Zur gezielten Formung von spezifischen Biegekantenprofilen kann das erfindungsgemäße Verfahren in vorteilhafter Weise mit einer Preßumformung durch den Einsatz eines oder mehrerer Formstempel kombiniert werden. Auf diese Weise können bestimmte Formhöhlungen erzeugt werden, indem die erwärmte Biegezone an erwünschter Stelle mit Hilfe der Formstempel zusätzlich umgeformt wird.

Die den erfindungsgemäßen Formkörpern zugrundeliegenden thermoplastischen Platten müssen zur erfolgreichen Durchführung des Verfahrens nicht notwendigerweise eine glatte Oberfläche aufweisen. Ohne Schwierigkeit können sowohl einseitig als auch beidseitig mit einem bestimmten Oberflächenprofil versehene Halbzeuge verwendet werden. Dem unterschiedlichen Querschnitt der Platte kann erforderlichenfalls durch eine entsprechend variable Steuerung der Beheizungstemperatur Rechnung getragen werden.

Ein weiterer Vorzug des erfindungsgemäßen Herstellungsverfahrens besteht darin, daß bereits mit Aussparungen versehene Platten ohne weiteres biegeumgeformt werden können. Hingegen können beispielsweise mit einem Lochraster versehene Platten nicht mit Hilfe von Verfahren umgeformt werden, bei denen das Halbzeug in einer Vakuum- oder Druckluft-Druckkammer oder auch mit Hilfe einer Flüssigkeit auf das Formwerkzeug aufgepresst wird. Das nachträgliche Aussagen, Ausschneiden, Ausstanzen oder Ausschmelzen von Aussparungen in fertige und geometrisch unregelmäßige Formkörper ist nicht nur mühsam und zeitaufwendig sondern führt in aller Regel auch zu Energie- oder Materialverlust, da die Ausschnitte entweder rezykliert oder aber verworfen werden müssen. Selbst einfache Bohrungen für die Montage von Baugruppen oder dergleichen sind wesentlich einfacher und billiger an der ebenen Fläche durchzuführen, da hierfür anstelle eines ansonsten erforderlichen Fünf-Achsbohrwerks ein Drei-Achsbohrwerk verwendet werden kann. Das erfindungsgemäße und mit Aussparungen oder einem Raster versehene Formkörper weist überdies gegenüber den konventionellen Formkörpern, in die die Aussparungen erst nach dem Umformprozeß eingebracht wurden, den Vorzug auf, daß die Ränder der Ausparungen entsprechend der Konfektionierung der Basisplatte wesentlich leichter abzurunden oder in anderer spezifischer Weise auszubilden sind.

Auch bei Bedruckungen, Gravuren bzw. Einfräsungen erweist sich das erfindungsgemäße Verfahren gegenüber den bekannten Umformverfahren überlegen, da auch hier die gesamte Plattenbearbeitung vor dem Umformprozeß, also im ebenen Zustand durchgeführt werden kann.

Die Bearbeitungsmöglichkeit der Platten vor dem Umformprozeß erweist sich insbesondere dann als vorteilhaft, wenn das Formkörper als Geräteträger fungieren soll, da die Montage von Baugruppen im ebenen Zustand sehr viel leichter vorgenommen werden kann und sogar gegebenenfalls Formkörper hergestellt werden können, aus denen eine installierte Baugruppe nachträglich nicht mehr zu entfernen ist.

Für die konkrete Durchführung des erfindungsgemäßen Verfahrens kommen je nach erwünschtem Automatisierungsgrad unterschiedliche Vorrichtungen in Betracht, wobei wenigstens eine Beheizungseinrichtung erforderlich ist, mittels derer thermoplastische Platten entlang von einer oder mehreren Verformungskurven, erwärmbar sind.

Im einfachsten Falle weist die Beheizungseinrichtung dem Verlauf der Verformungskurven entsprechende, fest installierte Heizstäbe oder Heizrohre auf. Gemäß einer vorteilhaften Ausführungsvariante sind die Heizstäbe oder Heizrohre als einzelne Heizelemente ausgebildet, die auf ein und derselben Beheizungseinrichtung in im wesentlichen frei wählbarer Anordnung installierbar sind. Auf diese Weise laßt sich mit einem Vorrat gleich oder auch unterschiedlich ausgebildeter Heizelemente eine Vielzahl verschiedener Formkörper mittels einer einzigen Vorrichtung herstellen. Es ist weiterhin vorteilhaft, wenn eine Halteeinrichtung vorgesehen ist, mittels derer die zu erwärmende Platte an der Beheizungseinrichtung fixierbar ist. Wenn die Halteeinrichtung beispielsweise an einer Laufkatze oder einem Schlitten aufgehängt ist, so können die zu verformenden Platten im Materiallager aufgenommen, anschließend zur Beheizungseinrichtung bewegt und dort in Position gebracht werden.

Wenn ein Materialzuschnitt mehrere Biegelinien aufweist, die den Materialzuschnitt in mehrere Zonen unterteilen, ist es bei dem Umformschritt nicht erforderlich, in jeder Zone des Materialzuschnitts einen Kraftangriff vorzusehen. Durch den Materialzusammenhalt ist nämlich auch die räumliche Lage einer Zone eines Materialzuschnitts veränderbar, ohne daß in dieser Zone ein Kraftangriff erfolgt.
Zur Erzeugung von gerade verlaufenden Biegekanten ist eine Erwärmung des Materialzuschnitts lediglich entlang einer schmalen Erwärmungszone erforderlich. Wenn jedoch Dehnung oder Prägezonen erzeugt werden sollen, wird bevorzugt in einer breiten Erwärmungszone erwärmt, um eine möglichst geringe Materialstärkenschwankung zu erreichen. Mit der Breite der Erwärumungszone sind darüber hinaus bei dem erfindungsgemäßen Verfahren Biegeradien und Eckenabrundungen gezielt einstellbar.
Mit dem erfindungsgemäßen Verfahren ist es möglich, thermoplastisches Kunststoffmaterial einer Materialstärke von 3 bis 10 mm zu verarbeiten. Dadurch lassen sich Formkörper herstellen, die eine hohe Eigenfestigkeit aufweisen. Dementsprechend zeichnen sich erfindungsgemäß Formkörper und erfindungsgemäße Displaytaschen durch eine Wandstärke von 3 bis 10 mm, insbesondere 6,5 mm bzw. 4 mm aus. Ein Vorteil des Verfahrens ist in diesem Zusammenhang auch, daß zur Herstellung der genannten Formkörper nur ein verhältnismäßig geringer Energieaufwand erforderlich ist.
Gemäß einer bevorzugten Ausführungsform der Erfindung ist vorgesehen, daß bei einem als Displaymöbel ausgebildeten Formkörper mit mindestens einer Displayfläche und mit mindestens einer an die Displayfläche angrenzenden Haltefläche zur Positionierung der Displayfläche diese Flächen einstükkig ausgebildet und durch Biegung eines lediglich entlang mindestens einer Biegelinie erwärmten Materialzuschnitts räumlich zueinander versetzt sind.

Vorzugsweise ist das Displaymöbel durch freies Biegen im Raum, d.h. ohne Lehre oder Gesenk hergestellt. In einem solchen Fall finden sich an dem Displaymöbel keine Spuren eines Kraftangriffes, da eine Krafteinleitung nur in Bereichen erfolgte, die nicht erwärmt und damit widerstandsfähig waren, und die Kanten sind entsprechend der Wärmeführung mit großem oder kleinem Radius, frei von Werkzeugmarken fein gerundet.

Ein Verformen entlang mehrerer Biegelinien in einem Arbeitsgang, welches bei dem erfindungsgemäßen Displaymöbel möglich ist, reduziert die erforderlichen Handhabungsschritte und damit die Herstellungszeit und die Herstellungskosten.

Vorzugsweise sind die Displayfläche und die Haltefläche an einem Regalboden ausgebildet, welcher zwischen zwei voneinander beabstandeten Pfosten angeordnet ist. Dabei besteht der Regalboden vorzugsweise aus einem im wesentlichen rechteckigen Materialzuschnitt, der entlang einer parallel zu einer der Materialkanten verlaufenden ersten Biegelinie und entlang weiterer Biegelinien derart pultförmig gebogen ist, daß die erste Biegelinie in drei Abschnitte unterteilt ist, von denen der erste und der dritte Abschnitt zueinander im wesentlichen parallel verlaufen und gegenüber dem zweiten Abschnitt jeweils einen im wesentlichen rechten Winkel einschließen.

Gemäß einer anderen bevorzugten Ausführungsform ist das Displaymöbel als Displayständer mit einem einstückig mit der Displayfläche und der Haltefläche ausgebildeten Fuß gestaltet, wobei die Displayfläche, die Haltefläche und der Fuß durch Biegen eines lediglich entlang von Biegelinien erwärmten Materialzuschnitts ausgebildet sind.

Gemäß einer weiteren bevorzugten Ausführungsform der Erfindung ist eine Abdeckhaube zur Abdeckung einer Displayfläche eines Displaymöbels mit mindestens einer Abdeckfläche und mit mindestens einer an die Abdeckfläche angrenzenden Haltefläche vorgeschlagen, wobei die Abdeckfläche und die Haltefläche einstückig ausgebildet sind und durch Biegen eines lediglich entlang von Biegelinien erwärmten Materialzuschnitts räumlich zueinander versetzt sind. Dabei ist es unter ästhetischen Gesichtspunkten besonders vorteilhaft, wenn die Abdeckfläche zwei symmetrisch zur Mittenebene der Abdeckfläche ausgebildete Halteflächen aufweist, wobei die zwischen der Abdeckfläche und jeweils einer Haltefläche ausgebildete Biegelinie gekrümmt verläuft, so daß die Abdeckfläche konkav oder konvex gewölbt ist.

Vorzugsweise bestehen das Displaymöbel, die Abdeckhaube und der Fuß aus einem Materialzuschnitt aus einem durchsichtigen Material, insbesondere aus Polymethylmetacrylat, welche gezielt nur einseitig auf der Innen- oder Unterseite bedruckt oder beschichtet ist. Die nur einseitige Bedruckung oder Beschichtung erleichtert die Herstellung, da ein Kraftangriff beim Verformen an der Seite erfolgen kann, die gezielt freigelassen worden ist. Dadurch werden bei der Herstellung anderenfalls austretende Bearbeitungsspuren vermieden. Die einseitige Bedruckung oder Beschichtung ist darüber hinaus im Gebrauch vorteilhaft, da Kratzspuren und ähnliches nur an der unbedruckten Seite des durchsichtigen Materials und damit im wesentlichen unsichtbar entstehen können. Auch eine Verschmutzung der Beschichtung oder Bedruckung wird verhindert.

Weitere vorteilhafte Ausgestaltungen und Weiterbildungen der Erfindung ergeben sich aus den Unteransprüchen sowie aus der Zeichnung im Zusammenhang mit der Beschreibung. Es zeigen:
- Fig. 1: eine Vorrichtung zur Durchführung des erfindungsgemäßen Verfahrens zur Herstellung einstückig ausgebildeter, dreidimensionaler Formkörper mit darin eingespanntem Materialzuschnitt vor dem Biegen,
- Fig. 2: die Vorrichtung in Fig. 1 mit dem Materialzuschnitt nach dem Biegen,
- Fig. 3: ein Heizelement für die Vorrichtung in Fig. 1 gemäß einer zweiten Ausführungsform,
- Fig. 4: eine Vorrichtung zur Durchführung des Verfahrens mit einer Laserheizvorrichtung,
- Fig. 5: eine weitere Ausführungsform einer Heizvorrichtung mit selektiv ansteuerbaren Heizelementen,
- Fig. 6: einen erfindungsgemäßen Formkörper,
- Fig. 7: eine erfindungsgemäße Displaytasche,
- Fig. 8: eine schematische Darstellung eines Materialzuschnitts während der Heizphase,
- Fig. 9: den Materialzuschnitt in Fig. 8 nach einem gemäß dem Verfahren der Erfindung durchgeführten freien Stauchen,

- Fig. 10: einen Materialzuschnitt mit einem eingeformten Bauteil,
- Fig. 11: einen Materialzuschnitt mit einer Rille zur Aufnahme von Dämpfungselementen.
- Fig. 12: einen Zuschnitt für einen dreidimensionalen Formkörper zur Verwendung als Displayträger,
- Fig. 13: einen nabenartig ausgebildeten Zentralbereich eines aus dem Zuschnitt in Fig. 12 hergestellten Formkörpers und
- Fig. 14: einen Ausschnitt des in Fig. 12 herausgeschnittenen Teil des Formkörpers in vergrößerter Darstellung.
- Fig. 15: den Regalboden eines als Regal ausgebildeten erfindungsgemäßen Displaymöbels, in perspektivischer Darstellung,

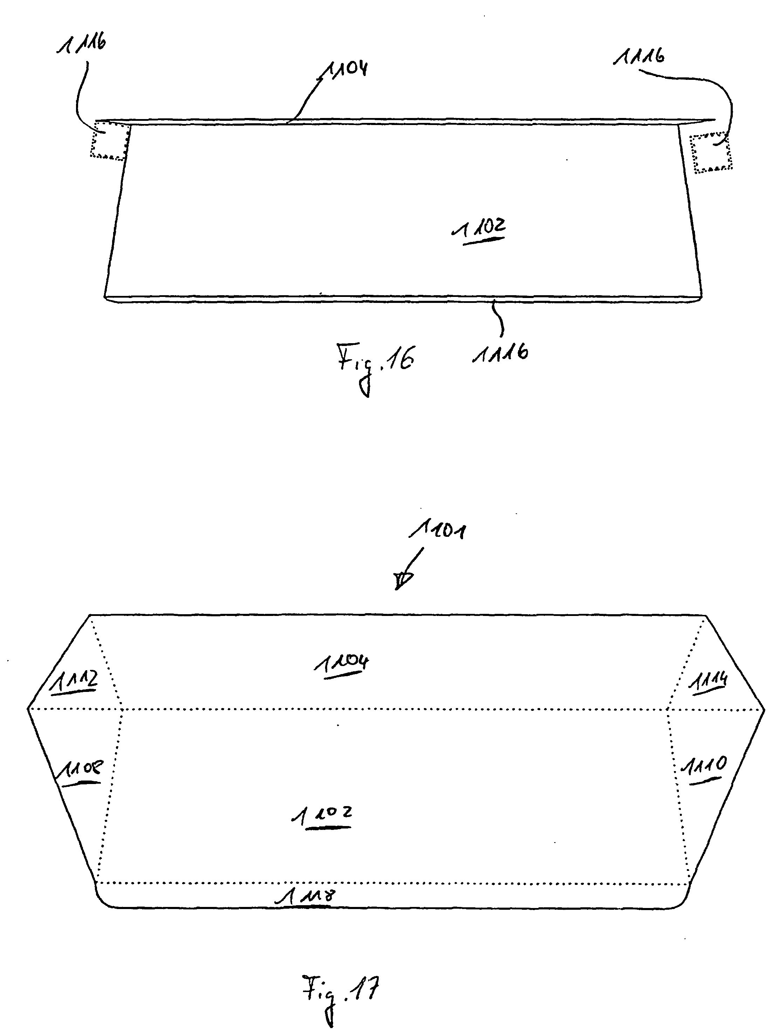

- Fig. 16: den Regalboden in Fig. 15 in einer Ansicht von oben,
- Fig. 17: einen Zuschnitt für den Regalboden in den Fig. 15 und 16,
- Fig. 18: ein als U-förmiger Frontalpräsenter ausgebildetes erfindungsgemäßes Displaymöbel,
- Fig. 19: den Zuschnitt für das Displaymöbel gemäß Fig. 18,
- Fig. 20: ein als Verkaufspyramide ausgebildetes erfindungsgemäßes Displaymöbel,
- Fig. 21 den: Zuschnitt für das Displaymöbel in Fig. 20,

- Fig. 22: einen ersten Zuschnitt für ein als Tisch ausgebildetes erfindungsgemäßes Displaymöbel,
- Fig. 23: einen tortenartigen Warenträger für Bücher,
- Fig. 24: einen Abschnitt eines Zuschnitts für den Warenträger in Fig. 23,
- Fig. 25: einen Sägezahneinsatz zur gestuften Präsentation von Büchern in einer Einbaulage an einem Winkelregalbord,
- Fig. 26: einen Zuschnitt für den Einsatz gemäß Fig. 25,
- Fig. 27: einen Fuß eines Pfostens eines Displaymöbels in perspektivischer Darstellung,
- Fig. 28: einen Zuschnitt für den Fuß gemäß Fig. 27, und
- Fig. 29: eine erfindungsgemäße Abdeckhaube.

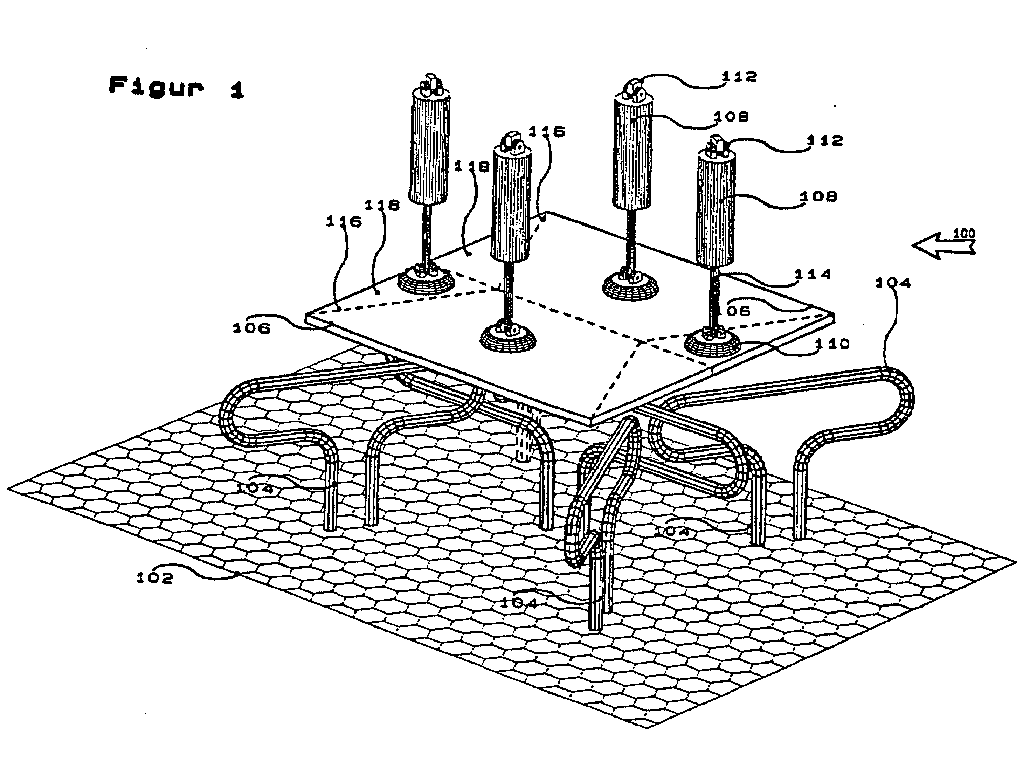

Die in Fig. 1 gezeigte Vorrichtung 100 zum freien Biegen eines ebenen Materialzuschnittes weist ein Gestell 102 und eine auf dem Gestell 102 angeordnete Heizvorrichtung 104 auf, welche zur zonenweisen Erwärmung eines ebenen Materialzuschnitts 106 aus thermoplastischem Material vorgesehen ist.

Zur Handhabung des Materialzuschnitts 156 sind oberhalb der Heizvorrichtung 104 an einem nicht gezeigten Rahmen in vertikaler Richtung gemeinsam verfahrbare Kolben-Zylinder-Einheiten 108 angeordnet, welche über Vakuumsauger 110 den Materialzuschnitt 106 festhalten.

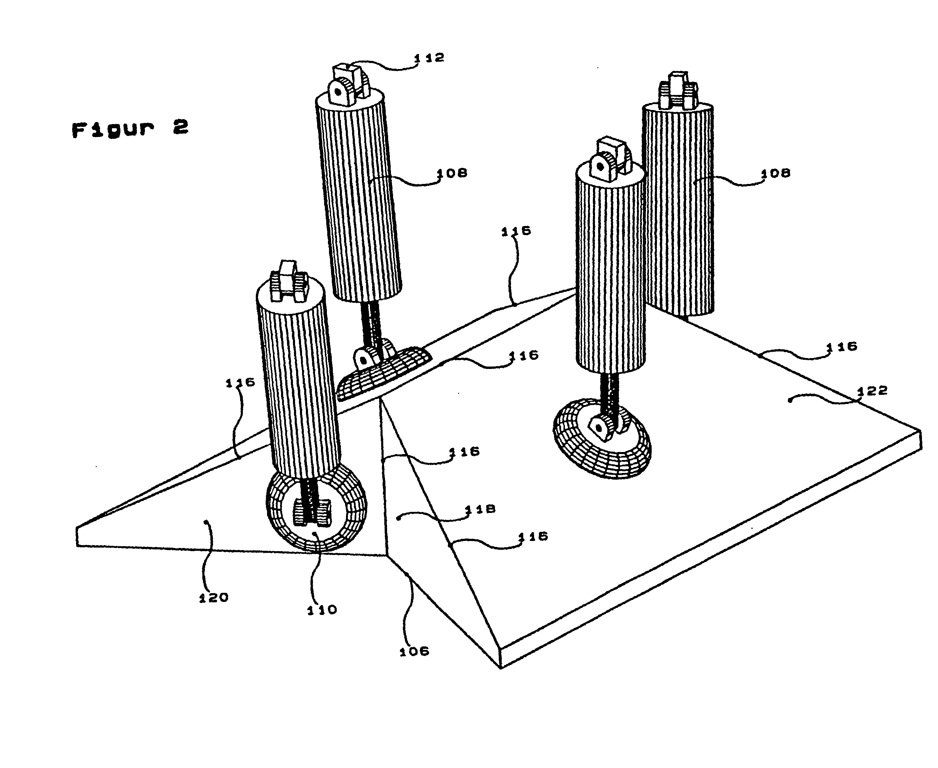

Die Kolben-Zylinder-Einheiten 108 weisen an ihrem Kolbenboden ein Gelenk 112 auf, um dessen Achse herum sie frei schwenkbar sind. Da auch die Vakuumsauger 110 an den Kolbenstangen verschwenkbar angeordnet sind, passen sich die Kolben-Zylinder-Einheiten 108 beim Verformen des Materialzuschnitts 106 der Lage des jeweiligen Materialsektors des Materialzuschnitts 106 an, wie aus Fig. 2 ersichtlich ist.

Die Vakuumsauger 110 greifen in Bereichen an, in welchen der Materialzuschnitt 106 - wie sich aus den zu Referenzzwecken aufgezeichneten Biegelinien 116 ergibt - nicht erwärmt wird. Es ist auch erkennbar, daß nicht an jeder Sektion des Materialzuschnitts 106 eine Kolben-Zylinder-Einheit 108 über einen Vakuumsauger angreift. Vielmehr bleiben zwei Sektionen 118 frei. Diese Sektionen 118 folgen bei der Umformung den jeweils benachbarten Zonen 120 bzw. 122 in einer Art, die an das Origamifalten erinnert, wobei der Materialzuschnitt nach dem Erwärmen gefaltet wird und danach während des Abkühlens solange gehalten wird, bis nach dem Abkühlen des Materialzuschnitts 106 die durch die Umformung erzeugte Raumform erhalten bleibt.

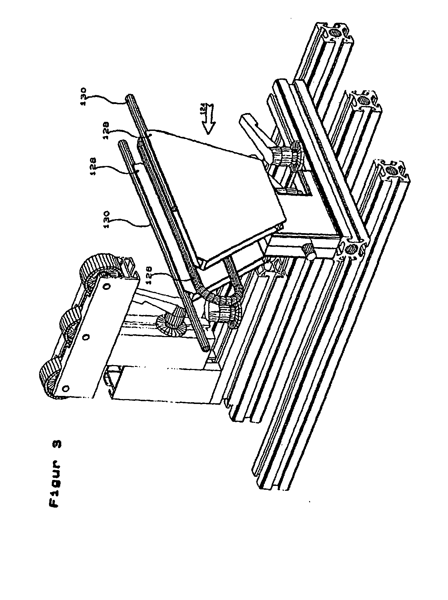

Fig. 3 zeigt ein Heizelement 124 für die Vorrichtung 100 in Fig. 1. Dieses Heizelement 124 weist einen Heizstab 126 auf, welcher wie die Heizelemente der Heizvorrichtung 104 als Elektrowiderstandsheizung ausgebildet ist. Das Heizelement 124 weist jedoch parallel zu dem Widerstandselement 126 angeordnete Abschirmelemente 128 auf, welche eine Erwärmung des Materialzuschnitts 106 auf schmale, für die Verformung erforderliche Zonen begrenzen soll. An der Oberseite der Abschirmelemente 128 sind Dichtungselemente 130 aus hitzebeständigem Material vorgesehen, die den Wärmeaustausch aufgrund von Konvention unterbinden sollen.

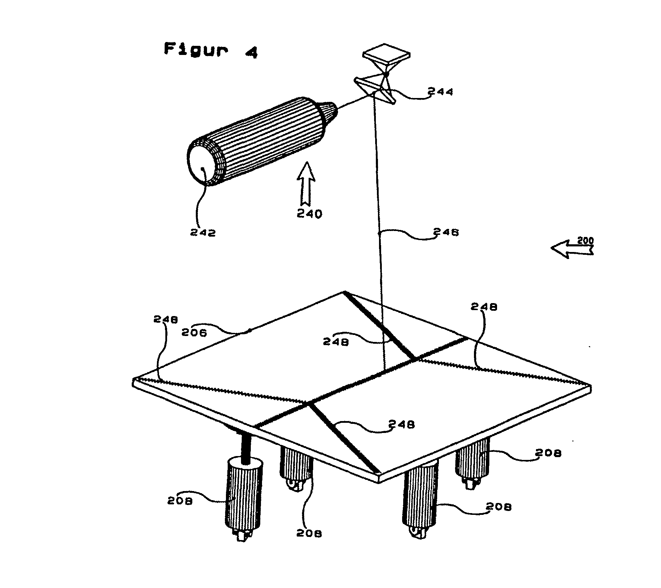

Fig. 4 zeigt eine zweite Ausführungsform einer erfindungsgemäßen Vorrichtung 200. Diese Vorrichtung 200 unterscheidet sich von der Vorrichtung 100 gemäß der ersten Ausführungsform durch die zur zonenweisen Erwärmung vorgesehene Laserheizvorrichtung 240 und durch die Anordnung der Kolben-Zylinder-Einheiten 208, welche im Gegensatz zur Vorrichtung 100 unterhalb des umzuformenden Materialzuschnitts 206 angeordnet sind. Da der Aufbau der Kolben-Zylinder-Einheiten 208 und deren gelenkige Anordnung an einem Gestell dem Aufbau und der Anordnung der Kolben-Zylinder-Einheiten 108 entspricht, wird auf die entsprechende Beschreibung verwiesen.

Die bei der Vorrichtung 200 zum freien Biegen von im wesentlichen ebenen Materialzuschnitten 206 vorgesehene Laserheizvorrichtung 240 weist einen stationär angeordneten Laser 242 sowie einen beweglich angeordneten Spiegel 244 auf. Der Spiegel 244, der computergesteuert angetrieben wird, lenkt den Laserstrahl 246 derart ab, daß auf dem Materialzuschnitt 206 ein Linienmuster 248 erzeugt wird, welches die späteren Biegekanten wiedergibt. Um die Breite der Erwärmungszonen entlang der Linien des Linienmusters 248 einzustellen, pendelt der Laserstrahl 246 entlang der Linien des Linienmusters 248.

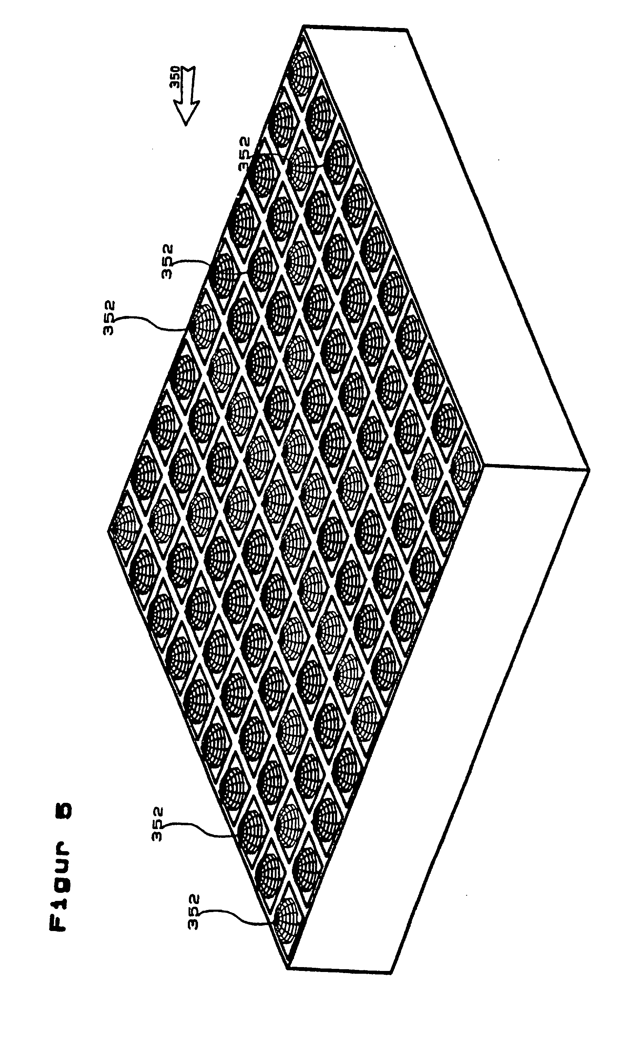

Fig. 5 zeigt eine Heizvorrichtung 350, welche alternativ zu der Heizvorrichtung 104 bei einer Vorrichtung zum freien Biegen einsetzbar ist. Die Heizvorrichtung 350 weist eine Vielzahl einzelner Heizpixel 352 auf. Die Heizpixel 352 sind Elektrowiderstandselemente, die in Sockelblöcken von 5 bis 10 mm Kantenlänge eingefaßt und zu einem Heizfeld zusammengefaßt sind, welches eine einzelne Ansteuerung der einzelnen Heizpixel 352 erlaubt.

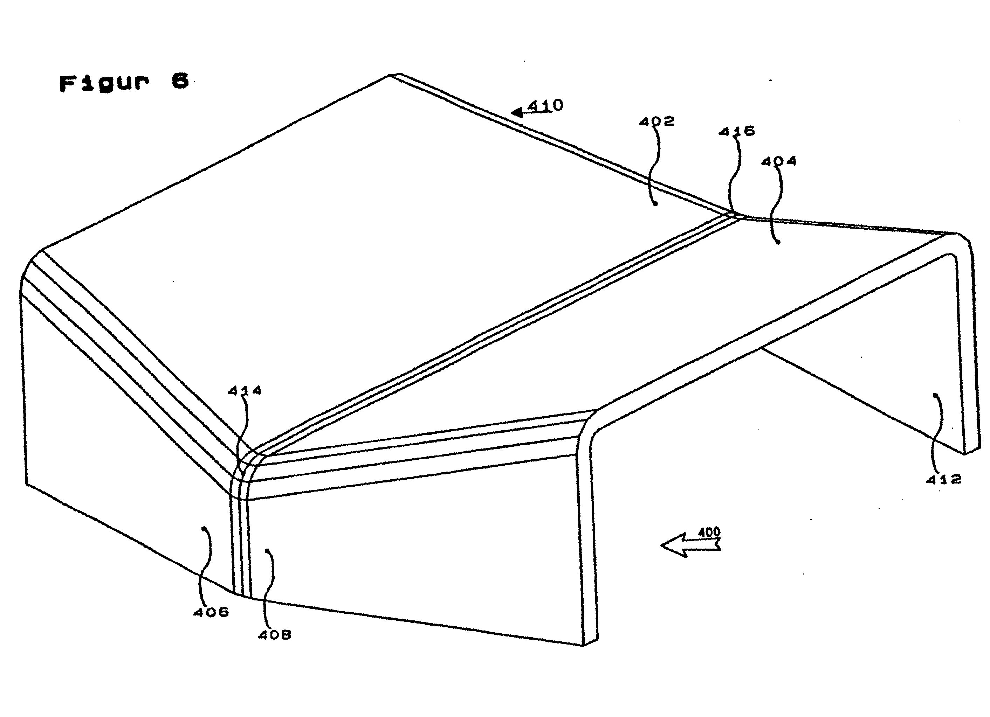

Fig. 6 zeigt in perspektivischer Darstellung einen gemäß dem erfindungsgemäßen Verfahren hergestellten Formkörper 400. Der Formkörper 400 der aus einem einzigen Materialzuschnitt 401 hergestellt ist, besteht aus Polymethylmetacrylat mit einer Wandstärke von 6, 5 mm und ist als Buchstütze verwendbar. Er weist zwei zueinander winklig angeordnete Displayflächen 402, 404 sowie vier Stützflächen 406, 408, 410, 412 auf. Die beiden Displayflächen 402, 404 schließen einen Winkel von 150° ein, wohingegen der Winkel zwischen den beiden Displayflächen 402, 404 und der jeweils benachbarten Stützfläche 406, 410 bzw. 408, 412 etwa 90° beträgt. Der Winkel zwischen den jeweils benachbarten Stützflächen 406, 408 bzw. 410, 412 beträgt 130 bzw. 135°. Dadurch, daß beim Umformen die Bereiche, an denen zwei Displayflächen und zwei Stützflächen aneinanderstoßen großflächig erwärmt worden sind, sind an dem Formkörper 400 Ausrundungsbereiche 414, 416 ausgebildet.

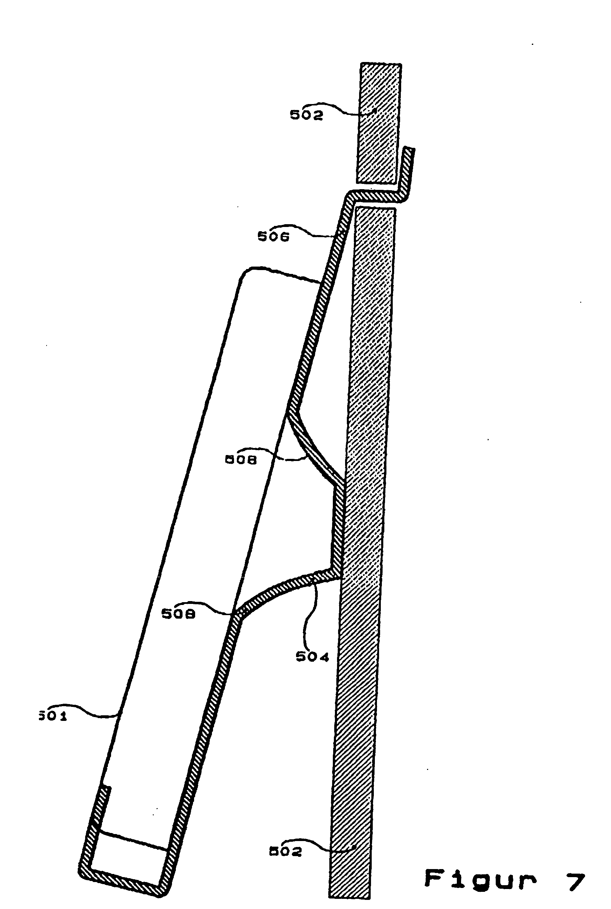

Fig. 7 zeigt eine nach dem erfindungsgemäßen Verfahren aus einem Materialzuschnitt 501 hergestellte Displaytasche 500 zum Einhängen an einer Lochschiene 502 eines Präsentationssystems. Die Displaytasche 500, die im Schnitt gezeigt ist und aus einem Poymethylmetacrylat einer Wandstärke von 4 mm besteht, weist einen Abstützfuß 504 auf, welcher durch Prägen einer großflächig erwärmten Zone mittels eines Preßstempels erzeugt worden ist. Dadurch, daß der Durchmesser des zum Prägen verwendeten Stempels nur 40 bis 70 % des Durchmessers der erwärmten Fläche beträgt, sind am Boden 506 der Displaytasche 500 im Bereich des Übergangs zum Abstützfuß 504 große Übergangsradien 508 ausgebildet. Wenn statt einer Kreisfläche eine Kreisringfläche erwärmt wird, lassen sich kegelstumpfförmige Ausprägungen erzielen, bei denen im Bereich der stumpfen Abschlußfläche die ursprüngliche, hohe Oberflächenqualität erhalten bleibt.

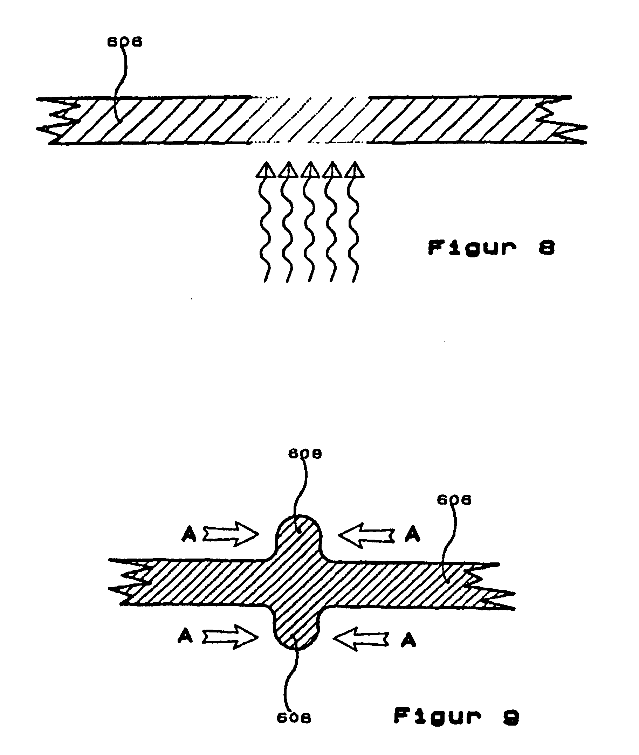

Die Fig. 8 und 9 veranschaulichen, wie an einem Materialzuschnitt 606 durch Erwärmen und anschließendes Stauchen in der Ebene des Materialzuschnitts 606 gemäß den Pfeilen A in Fig. 9, Rippen 608 ausgebildet werden können.

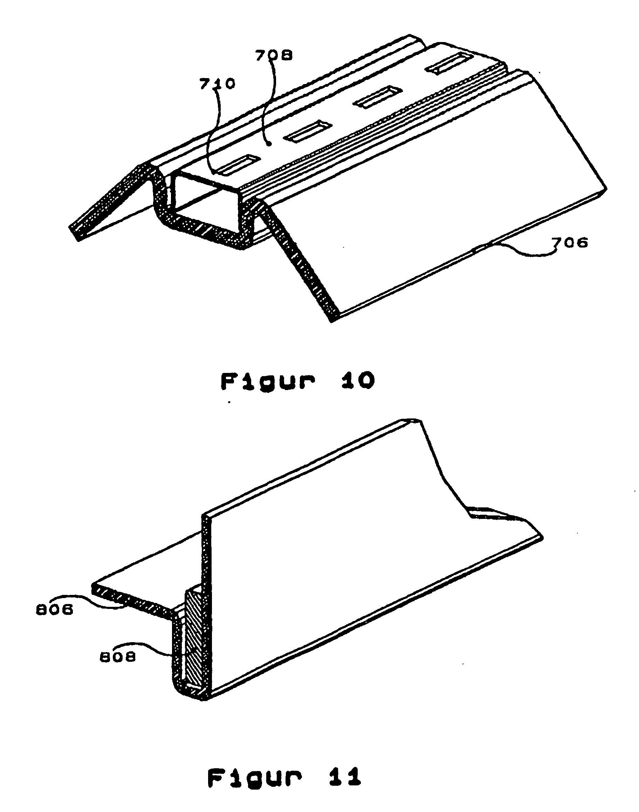

Die Fig. 10 und 11 zeigen weitere Möglichkeiten des Einsatzes des erfindungsgemäßen Verfahrens. Dabei ist in einen Materialzuschnitt 706 (Fig. 10), der in einer breiten Zone erwärmt worden ist, ein aus einem metallischen Werkstoff bestehendes U-Profil 708 eingeprägt worden, welches Längsschlitze 710 zur Aufnahme von Verbindungselementen aufweist. Das U-Profil 708, welches beim Umformen anstelle eines Preßstempels verwendet worden ist, wird durch diese Art der Umformung von dem Materialzuschnitt 706 teilweise umschlossen und hält daher ohne zusätzliche Verbindungsmittel an dem Materialzuschnitt 706.

Fig. 11 zeigt, daß mit dem erfindungsgemäßen Verfahren an einem Materialzuschnitt 806 auch Sicken ausbildbar sind, in welche Dämpfungsprofile 808, beispielsweise aus einem Moosgummi, einlegbar sind.

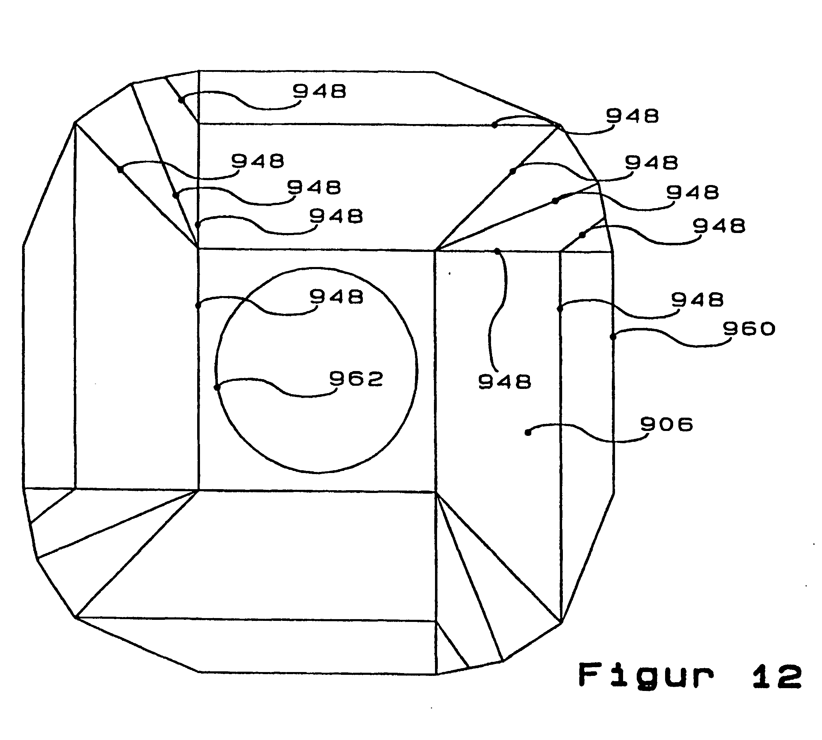

Die Fig. 12 bis 14 zeigen einen Materialzuschnitt für einen als Boden eines Displaysystems verwendbaren Formkörper sowie Abschnitte des Materialzuschnitts nach Durchführung von Umformschritten. Fig. 12 zeigt dabei, daß Linienmuster 948, entlang dessen eine Erwärmung erfolgt. Um nach dem Umformprozeß keine Nacharbeiten durchführen zu müssen, ist der Materialzuschnitt 906 an seinem äußeren Umfang 960 und am Rand eines inneren Durchbruchs 962 sauber abgeschnitten.

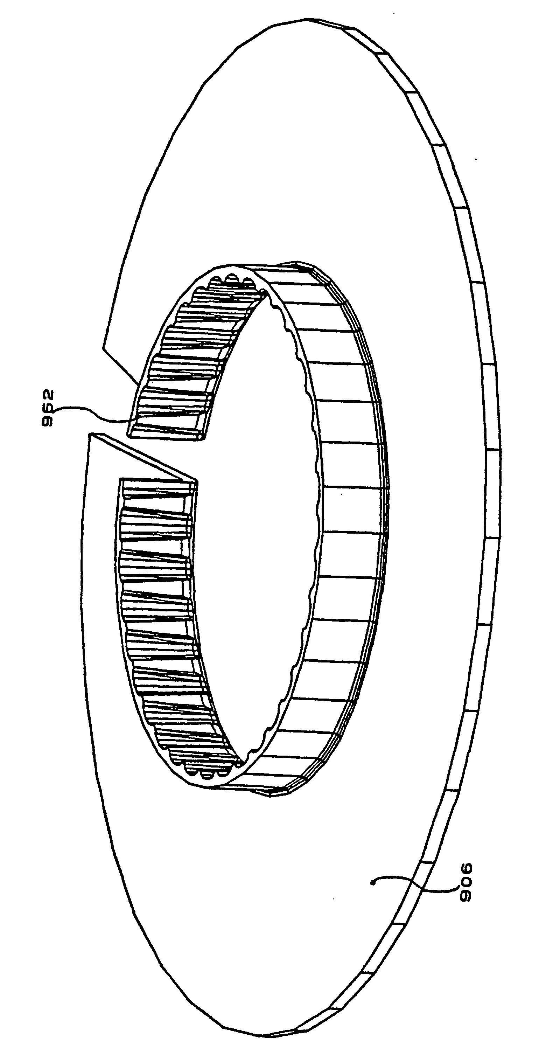

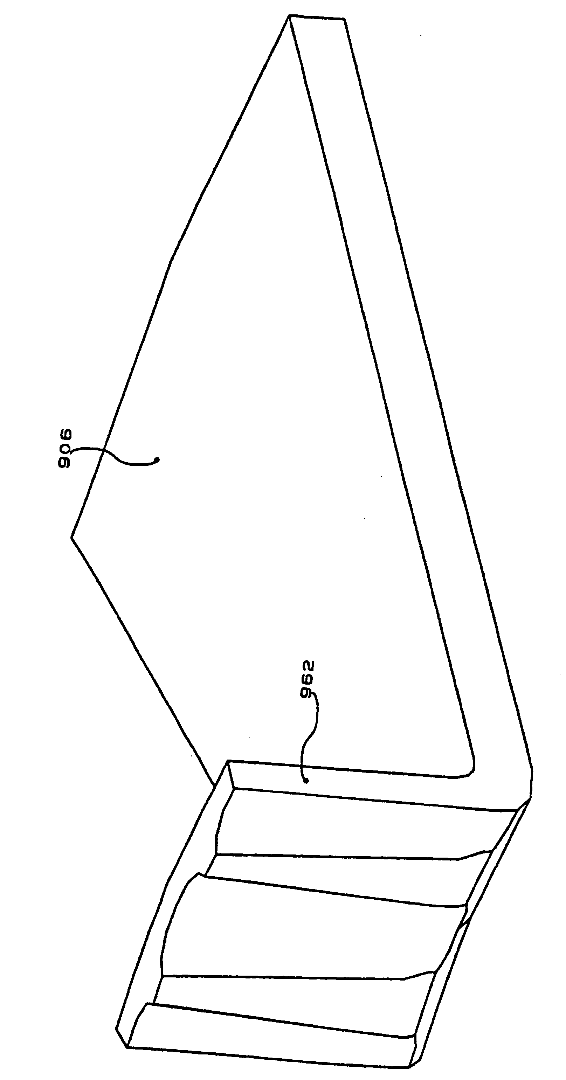

Die Fig. 13 und 14 zeigen, wie der Rand des 962 des inneren Durchbruchs durch das Verformen gestaltet worden ist. Durch das Hochbiegen aus der Ebene des Materialzuschnitts 906, welcher nur als Ausschnitt gezeigt ist, wird eine nabenartige Struktur erzeugt, die der Aufnahme einer Trägersäule dient.

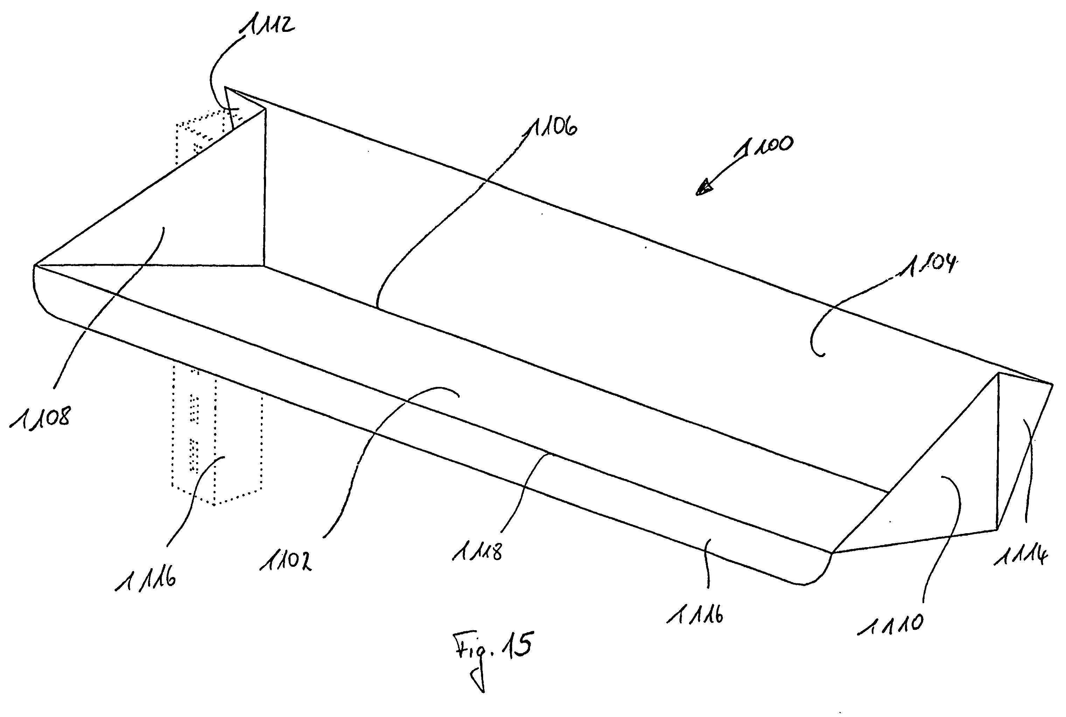

Die Fig. 15. bis 17 zeigen einen Regalboden 1100 eines Displaymöbels. Der Regalboden 1100 ist aus einem im wesentlichen ebenen Materialzuschnitt 1101 aus Polymetylmetacrylat durch Falten bei erwärmten Biegelinien hergestellt und weist eine Displayfläche 1102 sowie eine erste Haltefläche 1104 auf. Zwischen der Displayfläche 1102 und der ersten Haltefläche 1104 verläuft eine erste Biegelinie 1106, welche geradlinig ausgebildet ist. Der Winkel zwischen der eben ausgebildeten Displayfläche 1102 und der ebenfalls eben ausgebildeten Haltefläche 1104 beträgt etwa 70° bis 80° Grad, vorzugsweise 75° Grad.

Um die Tragfähigkeit des Regalbodens 1100 zu erhöhen, sind zweite Halteflächen 1108, 1110 vorgesehen, welche sich in Längsrichtung des Regalbodens 1100 gesehen am vorderen und rückwärtigen Ende der Displayfläche 1102 an diese anschließen, rechtwinklig zu dieser angeordnet sind und über Verbindungsflächen 1112, 1114 mit der Haltefläche 1104 verbunden sind. Während die Displayfläche 1102 und die Halteflächel 1104 rechteckig oder leicht trapezförmig ausgebildet sind, sind die zweiten Halteflächen 1108, 1110 und die Verbindungsflächen 1112, 1114 dreieckig ausgebildet. Dadurch und dadurch daß die Verbindungsflächen 1112, 1114 nahezu parallel zu der Haltefläche 1104 verlaufen, hat der Regalboden insgesamt eine dach- oder pultartige Form. Durch die dach- oder pultartige Ausgestaltung bei welcher die zweiten Halteflächen 1108, 1110 mit der jeweils benachbarten Verbindungsfläche 1112 bzw. 1114 einen rechten Winkel einschließen, ist der Regalboden 1100 leicht an vierkantförmigen Pfosten 1116 eines Displaymöbels montierbar.

Um die Anbringung von Kennzeichnungsmitteln zu erleichtern, ist an dem Regalboden noch eine Kennzeichnungsfläche 1118 vorgesehen, welche über eine Biegelinie 1120 mit der Displayfläche 1102 verbunden ist und von dieser unter einem Winkel von etwa 110° Grad abragt.

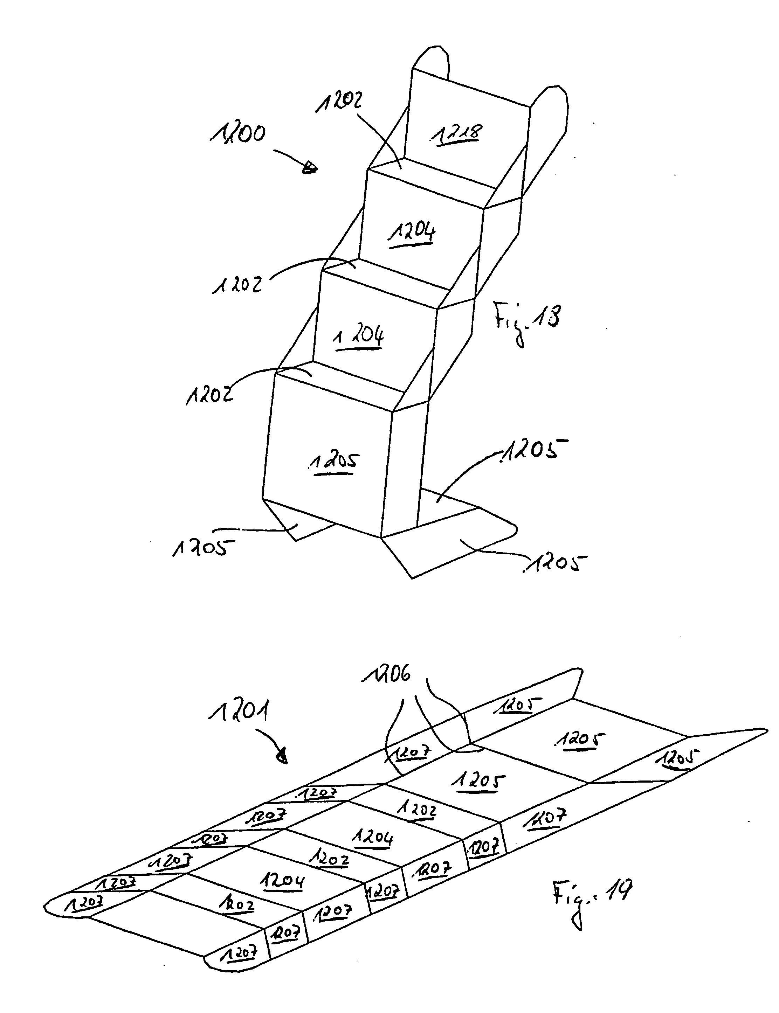

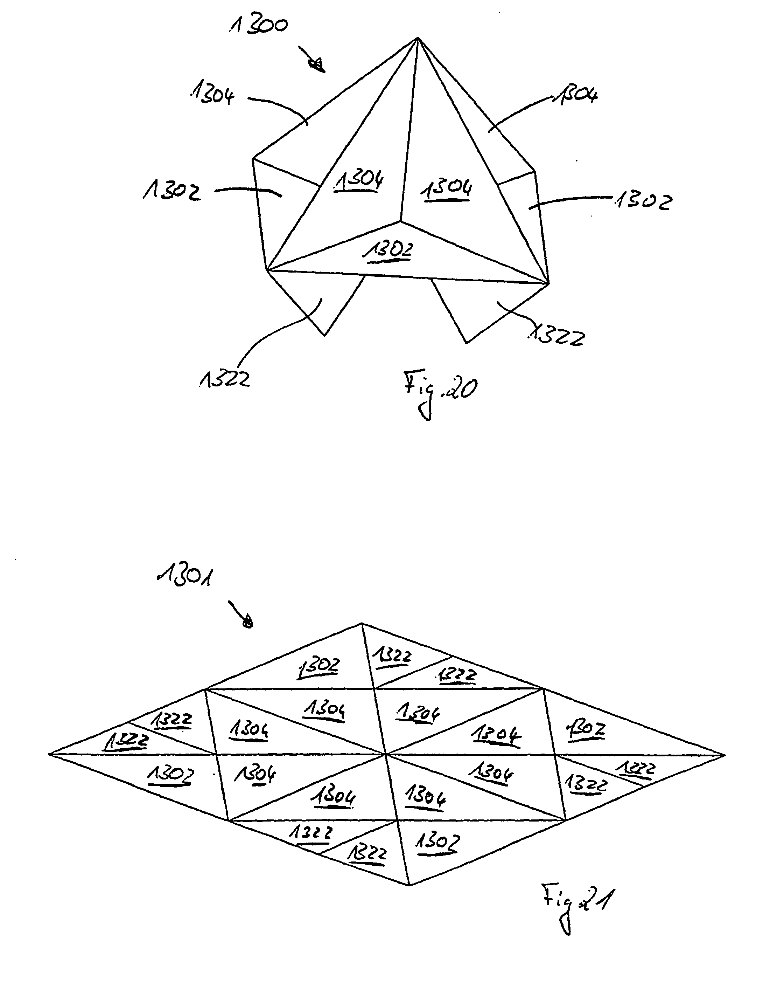

Die Fig. 18 und 19 zeigen einen U-förmigen Frontalpräsenter 1200 sowie einen Zuschnitt 1201 dafür in perspektivischer Darstellung. Der Frontalpräsenter 1200 weist diverse Displayflächen 1202 auf, die jeweils als ebene Rechtecke ausgebildet sind und parallel zueinander verlaufen. Diese Displayflächen sind über Halteflächen 1204, die ebenfalls eben und rechteckig ausgebildet sind miteinander verbunden. Weitere Halteflächen 1205 dienen als Fuß oder Sockel. Ferner sind Hilfsflächen 1207 vorgesehen, welche eine Verstärkung der Struktur bewirken, welche insgesamt eine treppenartige Erscheinung hat. Die Hilfsflächen 1207 liegen dabei zum Teil als Dopplung übereinander. Oberhalb der obersten Displayfläche 1202 ist noch eine Kennzeichnungsfläche 1218 angeordnet.

Der Frontalpräsenter 1200 besteht aus Polymetylmetacrylat (PMMA), wobei der Materialzuschnitt einseitig derart bedruckt ist, daß die Unter- und/oder Rückseiten die Beschichtung tragen. Bei der Herstellung des Frontalpräsenters 1200 aus dem in Fig. 19 gezeigten ebenen Materialzuschnitt 1201 ist der Materialzuschnitt 1201 lediglich entlang der verschiedenen Biegelinien 1206, von denen nur einige beispielhaft mit einem Bezugszeichen versehen sind, erwärmt worden und der Kraftangriff erfolgte an der unbedruckten Seite des Materialzuschnitts 1201 über Vakuumsauger, so daß an dem Frontalpräsenter 1200 keinerlei Gerätespuren sichtbar sind.

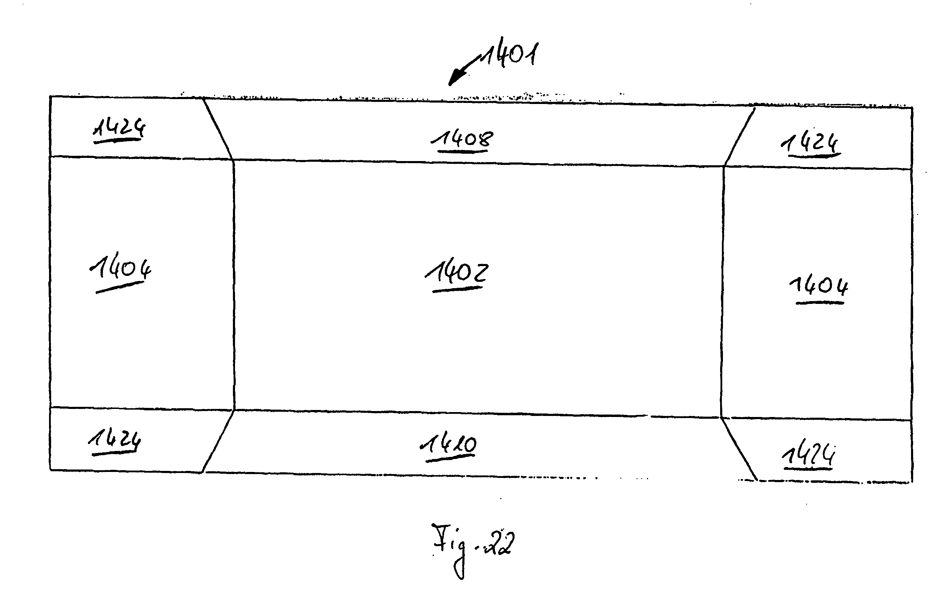

Die Fig. 20 und 21 zeigen ein als Verkaufspyramide 1300 ausgebildetes Displaymöbel sowie einen Zuschnitt 1301 dafür in perspektivischer Darstellung. Die Verkaufspyramide 1300 weist vier Displayflächen 1302 auf, welche als ebene flächige, rechtwinklige Dreiecke ausgebildet sind und in einer gemeinsamen Ebene liegen. Die Displayflächen 1302 sind über Haltefläche 1304 verbunden, welche ebenfalls als rechtwinklige Dreiecke ausgebildet sind, jeweils paarweise doppelt liegen und in einer Ansicht von oben ein Kreuz bilden. Die Halteflächen 1304 verlaufen senkrecht zu den Displayflächen 1302, wobei die einzelnen Halteflächen 304 und die Displayflächen 1302 die gleiche Größe haben.

Unterhalb der Displayflächen 1302 erstrecken sich Fußflächen 1322, die ebenfalls rechtwinklige Dreiecke sind, jeweils paarweise doppelt liegen und sich in den Ebenen der Halteflächen 1304 erstrecken. Da der Flächeninhalt der Dreiecke der Fußflächen 1322 nur halb so groß wie der Flächeninhalt der Displayflächen 1302 und der Halteflächen 304 ist, haben die aus den Fußflächen 1322 gebildeten Füße eine geringere Höhe als die Halteflächen 1304.

Die Verkaufspyramide 1300 besteht aus Polymetylmetacrylat (PMMA), welches auf seiner Rückseite bedruckt ist. Da die Halteflächen 1304 und die Fußflächen 1322 doppelt liegen und die Displayflächen 1302 nur einer einseitigen Belastung ausgesetzt sind, ist der Materialzuschnitt 1301 nur einseitig bedruckt. Die Bedruckung liegt im Gebrauch innen bzw. unten und ist daher vor Zerkratzen geschützt.

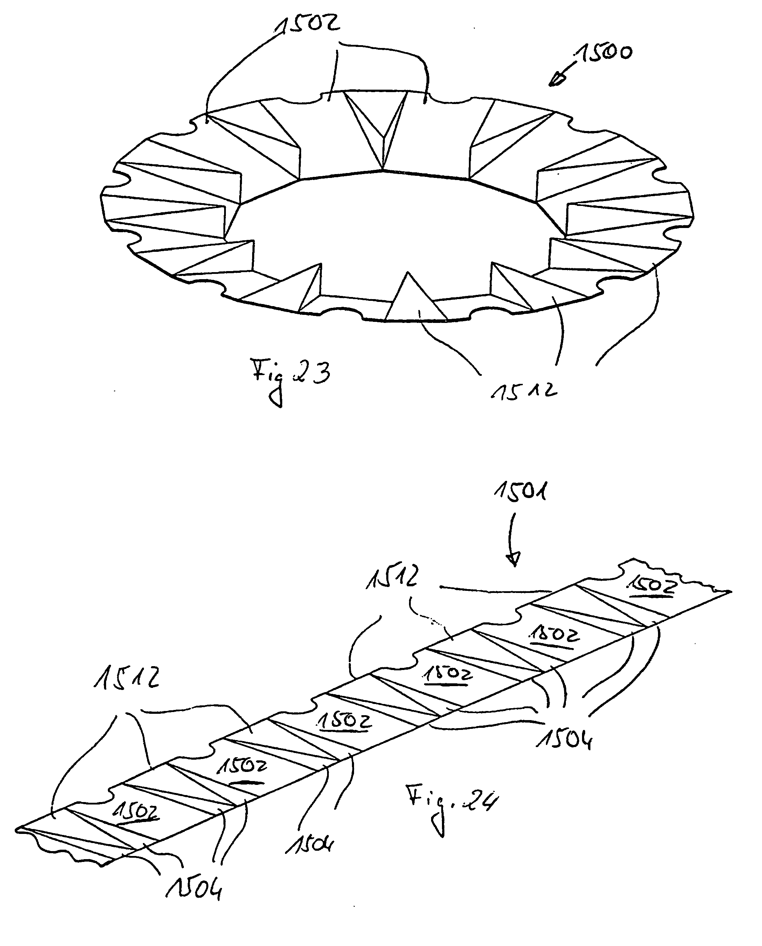

Fig. 22 zeigt einen Zuschnitt 1401 für ein als Tisch ausgebildetes Displaymöbel. An die rechteckig ausgebildete ebene Displayfläche 1402 schließen sich gegenüberliegend zwei erste Halteflächen 1404 und zwei zweite Halteflächen 1408, 1410 an. Die beiden ersten Halteflächen 1404 verlaufen im gebrauchsfertigen Zustand des Tisches in zueinander parallelen Ebenen und stehen dabei senkrecht zu der Displayfläche 1402. Um der Struktur Stabilität zu verleihen und ein Durchbiegen der Displayfläche 1402 zu verhindern, verlaufen die zweiten Halteflächen 1408, 1410 unter einem Winkel von ca. 25° Grad zur Ebene der Displayfläche 1402. Die zweiten Halteflächen 1408, 1410 sind im Gegensatz zu den ersten Halteflächen 1404 trapezförmig geschnitten. Verbindungsflächen 1424, die die ersten Halteflächen 1404 mit den zweiten Halteflächen 1408 bzw. 1410 verbinden, dienen der Aussteifung der Struktur. Der Zuschnitt ist an seiner Rückseite bedruckt.

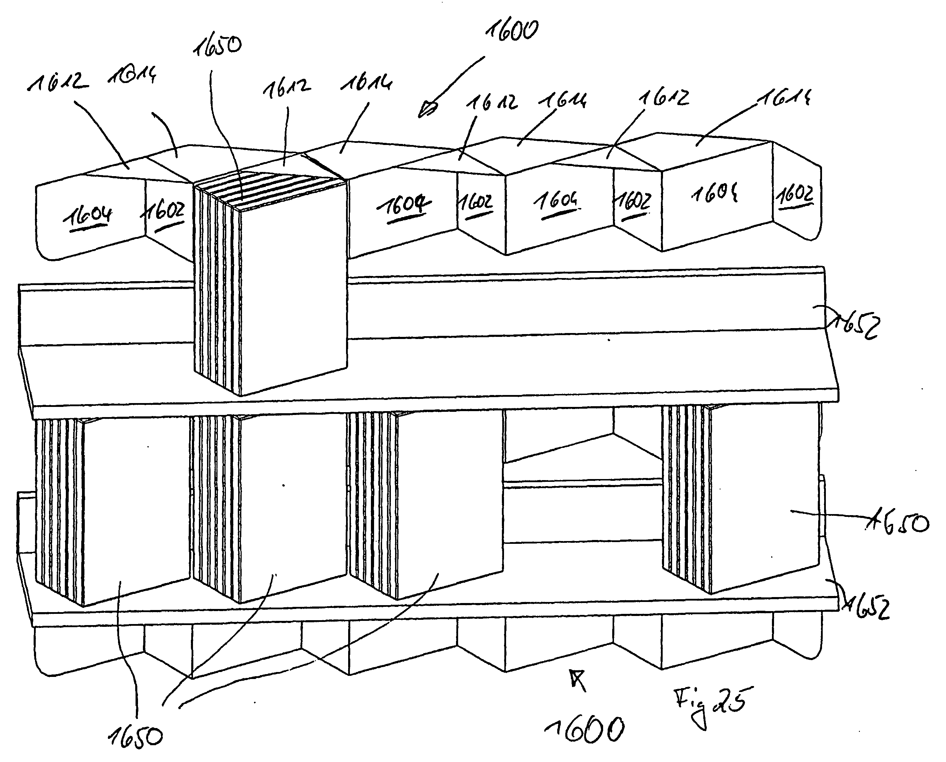

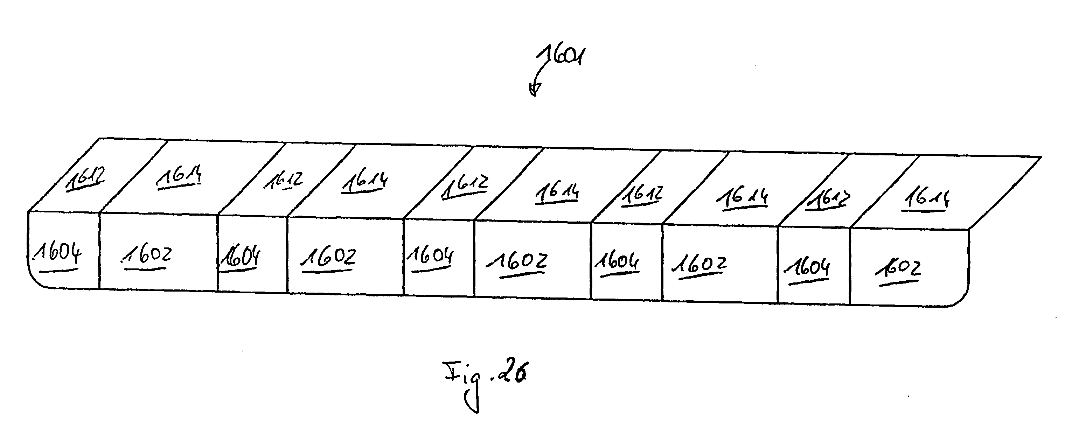

Die Fig. 23 und 24 zeigen einen tortenartigen Warenträger 1500 für Bücher sowie einen Zuschnitt 1501 dafür. Bei diesem Warenträger 1500 sind Displayflächen 1502 über dreiekkige Halteflächen 1504 und Verbindungsflächen 1512 derart miteinander verbunden, daß der Warenträger 1500 eine ringartige, dreidimensionale Struktur bildet.

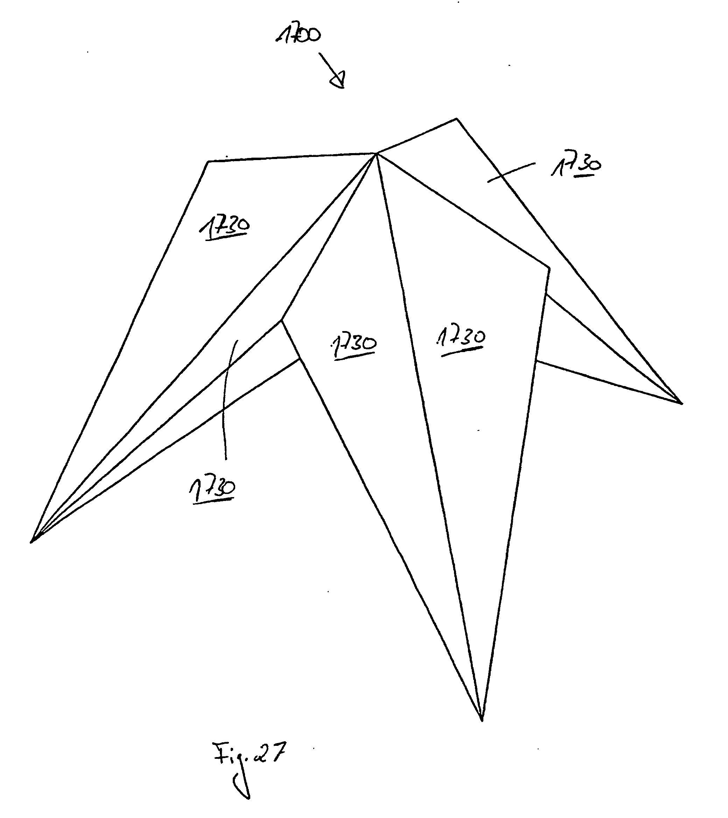

Die Fig. 25 und 26 zeigen Sägezahneinsätze 1600 zur gestuften Präsentation von Büchern 1650 in einer Einbaulage an Winkelregalborden 1652. Die Sägezahneinsätze weisen Displayflächen 1602 und Halteflächen 1604 sowie Verbindungsflächen 1612, 1614 auf. Wie die Hilfsflächen 1207 des Frontalpräsenters gemäß den Fig. 18 und 19 liegen die Verbindungsflächen 1612, 1614 teilweise parallel übereinander.

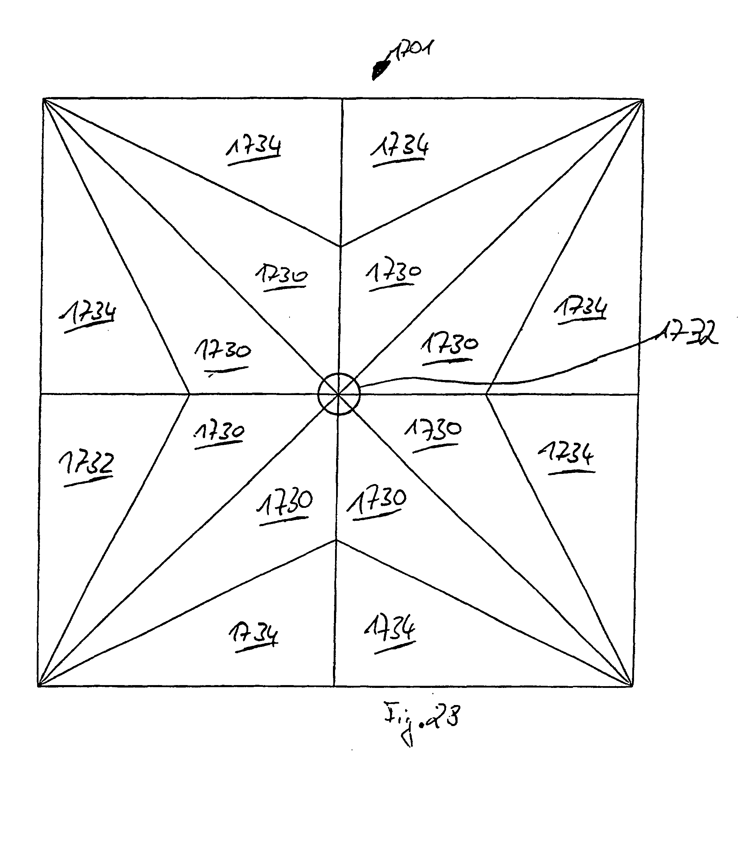

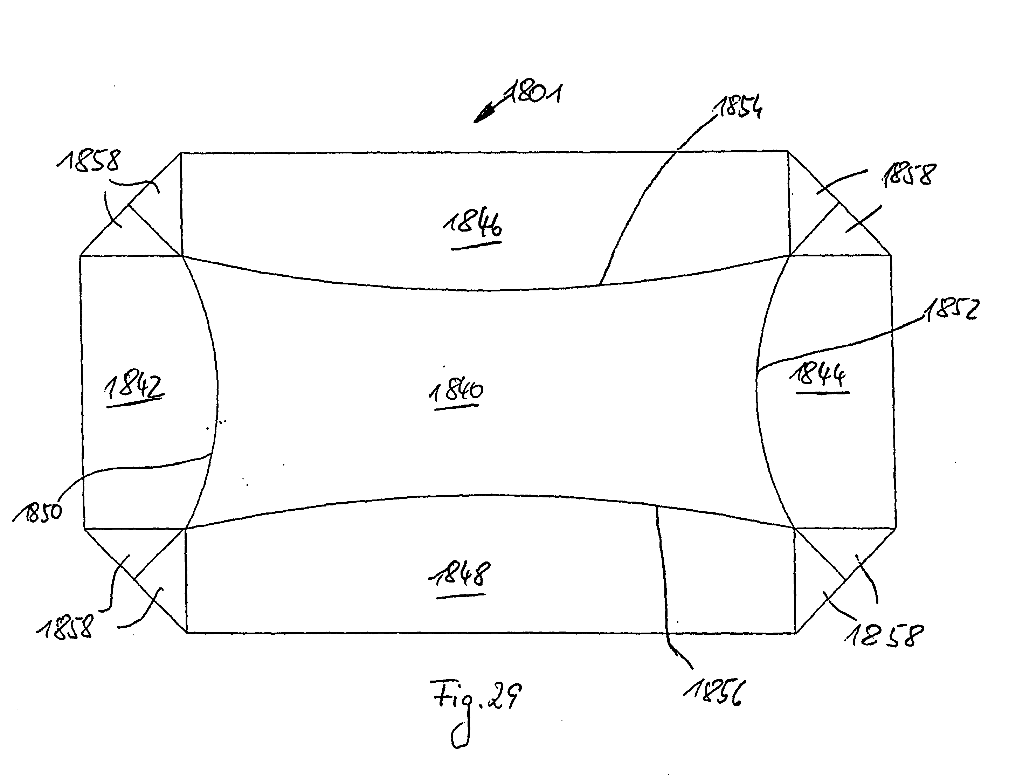

Die Fig. 27 und 28 zeigen einen Fuß 1700 eines Pfostens eines Displaymöbels in perspektivischer Darstellung sowie einen Zuschnitt 1701 für den in Fig. 27 gezeigten Fuß. Bei diesem Fuß 1700 sind acht Halteflächen 1730, die jeweils dreieckig geschnitten sind, insgesamt sternförmig um eine Pfostenhalteöffnung 1732 herum angeordnet. Verbindungsflächen 1734, die nach innen eingefaltet sind, dienen der Aussteifung der Struktur.

Der Fuß 1700 ist aus einem Materialzuschnitt aus durchsichtigem Polymetylmetacrylat (PMMA) hergestellt und an seiner Innenseite bedruckt.

Fig. 29 zeigt einen Zuschnitt 1801 für eine Abdeckhaube zur Abdeckung einer Displayfläche eines Displaymöbels. An eine zentral angeordneten Abdeckfläche 1840 grenzen Haltefläche 1842, 1844, 1846, 1848 an, welche jeweils über eine gekrümmte Biegelinie 1850, 1852, 1854, 1856 mit der Abdeckfläche verbunden sind. Dreieckige Stützflächen 1858, die eingefaltet werden, steifen die im Gebrauch gewölbte Struktur der Abdeckhaube aus. Die Abdeckhaube ist aus Polymetylmetacrylat (MMMA) hergestellt und vollständig durchsichtig.

## Patentansprüche

1. Verfahren zur Herstellung einstückig ausgebildeter, dreidimensionaler Formkörper, aus einem bei Raumtemperatur biegesteifen, im wesentlichen ebenen Materialzuschnitt, bei dem der Materialzuschnitt eingespannt, entlang von Umformlinien in einem schmalen Erwärmungsbereich erwärmt und in dieser Einspannung entlang der Umformlinien verformt wird,
**dadurch gekennzeichnet,**
**daß** das Umformen ohne Anschlagkante,
Kerbe oder Gesenk frei im Raum erfolgt, wobei die Krafteinleitung in nicht erwärmten Bereichen erfolgt und die erzielte Raumform nach dem Abkühlen, während dessen der Materialzuschnitt gehalten wird, dauerhaft erhalten bleibt.

2. Verfahren nach Anspruch 1, **dadurch gekennzeichnet, daß** das Umformen ein Biegen entlang von Biegelinien ist.

3. Verfahren nach Anspruch 1 oder 2, **dadurch gekennzeichnet, daß** der Zuschnitt während der Einspannung für das Umformen entlang der Umformlinien zur Erzeugung von Dehnungszonen und/oder Prägezonen in mindestens einer breiten Erwärmungszone erwärmt wird.

4. Verfahren nach einem der Ansprüche 1 bis 3, **dadurch gekennzeichnet, daß** zur Erzeugung von Vorsprüngen an dem dreidimensionalen Formteil in der mindestens einen Erwärmungszone ein Prägestempel angreift, dessen Ausdehnung in Richtung der Ebene des Materialzuschnitts geringer ist als die Ausdehnung der Erwärmungszone.

5. Verfahren nach einem der Ansprüche 1 bis 4, **dadurch gekennzeichnet, daß** die Erwärmungstemperatur und/oder die Breite der Erwärmungsbereiche entlang der Umformlinie variiert, um entstehende Kanten in Abhängigkeit von der Art des umzuformenden Materialzuschnitts sowie der Materialstärke gezielt zu formen.

6. Verfahren nach einem der Ansprüche 1 bis 5, **dadurch gekennzeichnet, daß** während der Erwärmung neben den Erwärmungsbereichen entlang der Umformlinien und/oder neben den Erwärmungszonen eine gezielte Kühlung erfolgt.

7. Verfahren nach einem der Ansprüche 2 bis 6, **dadurch gekennzeichnet, daß** der Materialzuschnitt mindestens entlang einer gekrümmten Biegelinie gebogen wird, um an dem Formteil eine gewölbte Fläche auszubilden.

8. Verfahren nach einem der Ansprüche 1 bis 7, **dadurch gekennzeichnet, daß** im Zuge des Biegens eine Warmformung erfolgt, bei der Verstärkungsrippen bildende Materialstauchungen an den Umformlinien erzeugt werden.

9. Verfahren nach einem der Ansprüche 1 bis 8, **dadurch gekennzeichnet, daß** im Wege der Warmformung U- oder Omegafalten bildende Materialdehnungen an den Umformlinien erzeugt werden.

10. Verfahren nach einem der Ansprüche 1 bis 9, **dadurch gekennzeichnet, daß** der Materialzuschnitt ein- oder beidseitig mit einer Strukturierung oder einem Oberflächenprofil versehen ist.

11. Verfahren nach einem der Ansprüche 1 bis 10, **dadurch gekennzeichnet, daß** vor dem Erwärmen und Umformen an dem Materialzuschnitt Aussparungen oder ein Aussparungsraster ausgebildet werden.

12. Verfahren nach einem der Ansprüche 1 bis 11, **dadurch gekennzeichnet, daß** vor dem Erwärmen und Umformen an dem Materialzuschnitt Bedruckungen oder Gravuren angebracht werden.

13. Verfahren nach einem der Ansprüche 1 bis 12, **dadurch gekennzeichnet, daß** vor dem Erwärmen und Umformen auf dem Materialzuschnitt Baugruppen angeordnet werden.

14. Formkörper, im wesentlichen hergestellt aus einem Materialzuschnitt (106;206;401;501;606;706;806;906) aus einem thermoplastischen Kunststoffmaterial, insbesondere im wesentlichen aus einem homogenen oder modifizierten Polymethylmetacrylat (PMMA) besteht, **dadurch gekennzeichnet, daß** durch eine Formgebung gemäß dem Verfahren nach einem der Ansprüche 1 bis 13 dessen Biegekanten frei von Werkzeugmarken sind und einen der Wärmeführung entsprechenden Radius aufweisen.

15. Formkörper nach Anspruch 14, **dadurch gekennzeichnet, daß** der Materialzuschnitt (106;206;401;501;606;706;806;906) eine Materialstärke von 3 bis 10 mm, vorzugsweise von 4 bis 7 mm und insbesondere 6,5 mm aufweist.

16. Formkörper nach Anspruch 14 oder 15, **gekennzeichnet durch** eine Ausgestaltung als Displaytasche zum Einhängen an einer Lochschiene eines Präsentationssystems.

17. Formkörper nach Anspruch 14 oder 15, **gekennzeichnet durch** eine Ausgestaltung als Displaymöbel zur verkaufsfördernden Präsentation von Waren, mit mindestens einer Displayfläche (1102;1202; 1302;1402;1502;1602) und mit mindestens einer an die Displayfläche angrenzenden Haltefläche (1104; 1204; 1304; 1404; 1504; 1604) zur Positionierung der Displayfläche (1102;1202;1302;1402;1502;1602), wobei die Displayfläche (1202;1302;02;1402;1502;1602) und die Haltefläche (1104;1204;1304;1404;1504;1604) einstückig ausgebildet und **durch** Biegung eines lediglich entlang mindestens einer Biegelinie erwärmten Materialzuschnitts (1101;1201;1301;1401;1501;1601) räumlich zueinander versetzt sind.

18. Formkörper nach Anspruch 17, **dadurch gekennzeichnet, daß** zwischen der Displayfläche (1102;1402), einer ersten und einer zweiten Haltefläche (1104,1108,1110;1404;1408;1410), die einstückig miteinander ausgebildet und zueinander räumlich versetzt sind, zwei Biegelinien verlaufen.

19. Formkörper nach Anspruch 17 oder 18, **gekennzeichnet durch** mindestens zwei voneinander beabstandete Pfosten (1116), zwischen denen sich mindestens ein die Displayfläche (1102) und die Halteflächen (1104,1108,1110) aufweisender Regalboden (1100) erstreckt.

20. Formkörper nach Anspruch 19, **dadurch gekennzeichnet, daß** der Regalboden (1100) aus einem, im wesentlichen rechteckigen Materialzuschnitt (1101) besteht, der entlang einer parallel zu einer der Materialkanten verlaufenden ersten Biegelinie (1106) und entlang weiterer Biegelinien derart pultförmig gebogen ist, daß die erste Biegelinie in drei Abschnitte unterteilt ist, von denen der erste und der dritte Abschnitt zueinander im wesentlichen parallel verlaufen und gegenüber dem zweiten Abschnitt jeweils einen im wesentlichen rechten Winkel einschließen.

21. Formkörper nach Anspruch 17 oder 18, **gekennzeichnet durch** einen einstückig mit der Displayfläche (1202) und der Haltefläche (1204) ausgebildeten Fuß, der **durch** Biegen eines lediglich entlang von Biegelinien erwärmten Materialzuschnitts (1201) ausgebildet ist.

22. Formkörper nach Anspruch 17 oder 18, **dadurch gekennzeichnet, daß** an eine im wesentlichen rechteckige Displayfläche (1402) vier Halteflächen (1404,1408,1410) angrenzen, von denen zwei, einander bezüglich der Displayfläche (1402) gegenüberliegende erste Halteflächen (1404) zueinander im wesentlichen parallel verlaufen und Stützwände für die zu den ersten Halteflächen im wesentlichen rechtwinklig verlaufende Displayfläche (1402) bilden, wobei die ersten Halteflächen (1404) mit den verbleibenden zweiten Halteflächen (1408,1410) zur Aussteifung über Verbindungsflächen (1424) verbunden sind.

23. Formkörper nach Anspruch 17 oder 18, **gekennzeichnet durch** zwei aneinander angrenzende, gegeneinander geneigte Displayflächen.

24. Formkörper nach Anspruch 23, **dadurch gekennzeichnet, daß** die Displayflächen (1202) zusätzlich jeweils über seitlich angeordnete, im Zuschnitt parallelogrammförmige oder trapezförmige Hilfsflächen (1207) an zu den Displayflächen (1202) sich im wesentlichen rechtwinklig verlaufende Halteflächen (1204) angeschlossen sind.

25. Formkörper nach Anspruch 17 oder 18, **dadurch gekennzeichnet, daß** an die Displayfläche zwei symmetrisch zur Mittenebene der Displayfläche ausgebildete Halteflächen angrenzen, wobei die zwischen der Displayfläche und jeweils einer Haltefläche ausgebildete Biegekante gekrümmt ausgeführt ist, so daß die Displayfläche konvex und oder konkav gewölbt ist.

26. Formkörper nach einem der Ansprüche 17 bis 25, **dadurch gekennzeichnet, daß** der Materialzuschnitt (1101;1201;1301;1401;1501;1601) aus einem durchsichtigen Material besteht und auf der Innen- oder Unterseite der Display- und/oder Halteflächen einseitig bedruckt oder beschichtet ist.

27. Formkörper nach Anspruch 14 oder 15, **gekennzeichnet durch** eine Ausgestaltung als Abdeckhaube zur Abdeckung einer Displayfläche eines Displaymöbels, mit mindestens einer Abdeckfläche (1840) und mit mindestens einer an die Abdeckfläche (1840) angrenzenden Haltefläche (1842,1844,1846,1848), wobei die Abdeckfläche (1840) und die Haltefläche (1842,1844,1846,1848) einstückig ausgebildet sind und **durch** Biegen eines lediglich entlang von Biegelinien erwärmten Materialzuschnitts (1801) räumlich zueinander versetzt sind.

28. Formkörper nach Anspruch 27, **dadurch gekennzeichnet, daß** an die Abdeckfläche (1840) zwei symmetrisch zur Mittenebene der Abdeckfläche (1840) ausgebildete Halteflächen (1842,1844,1846,1848) angrenzen, wobei die zwischen der Abdeckfläche (1840) und jeweils einer Haltefläche (1842,1844,1846,1848) ausgebildete Biegelinie gekrümmt verläuft, so daß die Abdeckfläche (1840) konkav und oder konvex gewölbt ist.

29. Formkörper nach Anspruch 27 oder 28, **dadurch gekennzeichnet, daß** der Materialzuschnitt (1801) aus einem durchsichtigen Material, insbesondere Polymethylmetacrylat (PMMA) besteht und auf der Innen- oder Unterseite der Abdeck- und/oder Halteflächen (1840,1842,1844,1846,1848) einseitig bedruckt oder beschichtet ist.

30. Formkörper nach Anspruch 14 oder 15, **gekennzeichnet durch** eine Ausgestaltung als Fuß zur Halterung eines Pfostens eines Displaymöbels, mit mehreren aneinander angrenzenden Halteflächen (1730) und einer zentral angeordneten Pfostenhalteöffnung (1732), wobei die Halteflächen (1730) untereinander einstückig ausgebildet und **durch** Biegen eines lediglich entlang von Biegelinien erwärmten Materialzuschnitts (1701) räumlich zueinander versetzt sind.

31. Formkörper nach Anspruch 30, **dadurch gekennzeichnet, daß** der Materialzuschnitt (1701) aus einem durchsichtigen Material, insbesondere Polymethylmetacrylat (PMMA) besteht und auf der Innen- oder Unterseite der Halteflächen (1730) einseitig bedruckt oder beschichtet ist.

32. Vorrichtung zur Durchführung des Verfahrens gemäß einem der Ansprüche 1 bis 13, mit einer Heizvorrichtung (104;240) zur Erwärmung von Materialzuschnitten (106;206;401;501;606;706;806;906) entlang einer oder mehrerer Umformlinien, mindestens einer Haltevorrichtung zur Festlegung des Materialzuschnitts (501) und mit mindestens einer Biegevorrichtung zum Biegen des Materialzuschnitts (501), **dadurch gekennzeichnet, daß** die Biegevorrichtung mehrere Kolben-Zylinder-Einheiten (108;208) aufweist, deren aus einem Zylinder ein- und ausfahrbare Kolben jeweils beweglich angeordnete Vakuumsauger (110) zum Angriff an Materialzuschnitten (106) aufweisen, die gleichzeitig als Haltevorrichtung fungieren.

33. Vorrichtung nach Anspruch 32, **dadurch gekennzeichnet, daß** die Heizvorrichtung (104) mit gleich oder unterschiedlich ausgebildeten Heizelementen variabel bestückbar ist.

34. Vorrichtung nach Anspruch 32 oder 33, **dadurch gekennzeichnet, daß** die Kolben-Zylinder-Einheiten (108) um einen Fußpunkt drehbar gelagert sind.

## Claims

1. A method for producing one-piece, three-dimensional shaped bodies from a substantially planar material blank which is resistant to bending at room temperature, in which the material blank is clamped in position, heated along deformation lines extending in a narrow heating region and then deformed along said deformation lines in this clamped state
**characterized in that**
said deformation is performed freely in space, without the use of a stop edge, indentation or die, with the force being introduced in non-heated regions and the three-dimensional shape attained is permanently preserved after cooling during which the material blank is kept.

2. The method according to claim 1 **characterized in that** said deformation comprises a bending along bending lines.

3. The method according to claim 1 or 2 **characterized in that**, while in the clamped state for deformation along said deformation lines, said material blank is heated in at least one wide heating region thereof so as to create extension regions and/or embossing regions.

4. The method according to any one of claims 1 through 3,
**characterized in that**, for producing projections in the three-dimensional shaped part, a pressure ram engages in the at least one heating region, which ram is smaller in dimension in the direction of the plane of the material blank than said heating region.

5. The method according to any one of claims 1 through 4, **characterized in that** the heating temperature and/or the width of the heating regions along the deformation line varies so as to allow a well-aimed shaping of resulting edges as a function of the kind of material blank to be deformed as well as of the material thickness.

6. The method according to any one of claims 1 through 5, **characterized in that** - during heating - a well-aimed cooling step is performed next to the heating regions along the deformation lines and/or next to the heating regions.

7. The method according to any one of claims 2 through 6, **characterized in that** said material blank is bent along at least one curved bending line so as to create a curved surface in the shaped part.

8. The method according to any one of claims 1 through 7, **characterized in that** - in the course of the bending operation - a hot forming step takes place in which upsetting deformations of the material forming reinforcing ribs are created at the deformation lines.

9. The method according to any one of claims 1 through 8, **characterized in that**, by means of hot forming, material extensions forming U- or omega folds are created at the deformation lines.

10. The method according to any one of claims 1 through 9, **characterized in that** said material blank is provided with a structure or a surface profile on one or both sides thereof.

11. The method according to any one of claims 1 through 10 **characterized in that** - before the heating and deformation operations - recesses or a grid of recesses are formed in the material blank.

12. The method according to any one of claims 1 through 11 **characterized in that -** before the heating and deformation operations - prints or engravings are provided on the material blank.

13. The method according to any one of claims 1 through 12, **characterized in that** - before the heating and deformation operations - components or component packages are provided on the material blank.

14. A shaped body, substantially produced of a material blank (106;206;401;501;606;706;806;906) made of a thermoplastic plastic material, in particular substantially of a homogeneous or modified polymethylmethacrylate (PMMA), **characterized in that** by a shaping in accordance with the method according to any one of claims 1 through 13, the bending edges of said shaped body are free from tool marks and have a radius corresponding the heat guidance.

15. The shaped body according to claim 14, **characterized in that** said material blank (106;206;401;501;606;706;806;906) is of a material thickness of 3 mm to 10 mm, preferably 4 mm to 7 mm and especially 6.5 mm.

16. The shaped body according to claim 14 or 15, **characterized by** a configuration as a display bag for hanging up in a perforated rail of a presentation system.

17. The shaped body according to claim 14 or 15, **characterized by** a configuration as a display furniture item for the sales-promoting presentation of goods, having at least one display surface (1102;1202;1302;1402;1502,1602) and at least one support surface (1104; 1204; 1304; 1404; 1504; 1604) adjoining said display surface, for positioning said display surface (1102;1202;1302;1402;1502,1602), with said display surface (1102;1202;1302;1402;1502,1602) and said support surface (1104;1204;1304;1404;1504;1604) being of the one-piece type and staggered in space relative to each other by bending a material blank (1101;1201;1301;1401;1501;1601) which has been heated only along at least one bending line.

18. The shaped body according to claim 17, **characterized in that** two bending lines extend between said display surface (1102;1402), first and second support surfaces (1104,1208,1110;1404;1408;1410) which surfaces are formed as one piece and staggered in space relative to each other.

19. The shaped body according to claim 17 or 18, **characterized by** at least two posts (1116) spaced from each other, between which at least one shelf bottom (1100) extends which includes said display surface (1102) and said support surfaces (1104,1108,1110).

20. The shaped body according to claim 19, **characterized in that** said shelf bottom (1100) consists of a substantially rectangular material blank (1101) which is bent along a first bending line (1106) extending in parallel to one of the material edges, as well as along further bending lines in such a desk-shaped manner so as to subdivide said first bending line into three sections, the first and third of which extend substantially in parallel to each other and each define a substantially right angle with said second section.

21. The shaped body according to claim 17 or 18, **characterized by** a foot which is formed as one piece with said display surface (1202) and said support surface (1204), said foot being produced by bending a material blank (1201) which has been heated only along bending lines.

22. The shaped body according to claim 17 or 18, **characterized in that** four support surfaces (1404,1408,1410) adjoin a substantially rectangular display surface (1402), of which two first support surfaces (1404), which are opposite each other with respect to said display surface (1402), extend substantially in parallel to each other, forming support walls for the display surface (1402) which substantially extends perpendicularly to said first support surfaces, said first support surfaces (1404) being connected to the remaining second support surfaces (1408,1410) through connecting surfaces (1424) for stiffening purposes.

23. The shaped body according to claim 17 or 18, **characterized by** two display surfaces adjoining each other and inclined toward each other.

24. The shaped body according to claim 23, **characterized in that** said display surfaces (1202) are additionally connected to support surfaces (1204) extending substantially perpendicularly to said display surfaces (1202), through laterally extending auxiliary surfaces (1207) whose blanks are parallelogram-shaped or trapezoidal.

25. The shaped body according to claim 17 or 18, **characterized in that** two support surfaces formed symmetrically to the central plane of said display surface adjoin said display surface, with the bending edge formed between said display surface and one support surface each is of the curved type so as to make the display surface concave or convex.

26. The shaped body according to any one of claims 17 through 25, **characterized in that** said material blank (1101;1201;1301;1401;1501;1601) is made of a transparent material and has one side of the interior or bottom side of its display and/or support surfaces imprinted on or coated.

27. The shaped body according to claim 14 or 15, **characterized by** a configuration as a covering cap for covering a display surface of a display furniture item, including at least one cover surface (1840) and at least one support surface (1842,1844,1846,1848) adjoining said cover surface (1840), said cover surface (1840) and said support surface (1842,1844,1846,1848) being formed as one piece and staggered from each other in space by bending a material blank (1801) which was heated only along bending lines.

28. The shaped body according to claim 27, **characterized in that** two support surfaces (1842,1844,1846,1848) formed symmetrically to the central plane of said cover surface (1840) adjoin said cover surface (1840), with the bending line formed between said cover surface (1840) and one support surface (1842,1844,1846,1848) each extending in the form of a curve so as to make the cover surface (1840) concave or convex.

29. The shaped body according to claim 27 or 28, **characterized in that** said material blank (1801) is made of a transparent material, in particular polymethylmethacrylate (PMMA), and has one side of the interior or bottom side of its cover and/or support surfaces (1840,1842,1844,1846,1848) imprinted on or coated.

30. The shaped body according to claim 14 or 15, **characterized by** a configuration as a foot for supporting a post of a display furniture item, including plural adjoining support surfaces (1730) and a centrally located post support opening (1732), with said support surfaces (1730) being formed as one piece and being staggered from each other in space by bending a material blank which was heated only along bending lines.

31. The shaped body according to claim 30, **characterized in that** said material blank (1701) is made of a transparent material, in particular polymethylmethacrylate (PMMA), and has one side of the interior or bottom side of its support surfaces (1730) imprinted on or coated.

32. A device for performing the method according to any one of claims 1 through 13, including a heating device (104; 240) for heating material blanks (106;206;401;501; 606;706; 806;906) along one or plural deformation lines, at least one support device for fixing said material blank (501) in position, and at least one bending device for bending said material blank (501), **characterized in that** said bending device includes plural piston-cylinder units (108;208) whose pistons, which may be retracted or extended from a cylinder, each include movably mounted vacuum suction units (110) for engaging material blanks (106), which units (110) simultaneously function as support means.

33. The device according to claim 32, **characterized in that** said heating device (104) may variably be provided with identical or different heating elements.

34. The device according to claim 32 or 33, **characterized in that** said piston-cylinder units (108) are pivoted about a foot point.

## Revendications

1. Procédé de fabrication d'un corps tridimensionnel, monobloc, à partir d'une coupe de matériau essentiellement plane, résistante à la flexion à température ambiante, dans lequel la coupe de matériau est immobilisée, chauffée le long de lignes de déformation dans une petite zone d'échauffement et déformée le long des lignes de déformation alors qu'elle est immobilisée, **caractérisé en ce que** la déformation se réalise sans arête de butée, encoche ou matrice, libre dans l'espace, l'apport de force s'effectuant dans des zones non chauffées et que la forme tridimensionnelle réalisée, après le refroidissement pendant lequel la coupe de matériau est maintenue, est conservée de manière durable.

2. Procédé selon la revendication 1, **caractérisé en ce que** la déformation est une pliure le long de lignes de pliure.

3. Procédé selon la revendication 1 ou 2, **caractérisé en ce que**, pendant l'immobilisation pour la déformation, le long des lignes de déformation, la coupe est chauffée au moins dans une large zone d'échauffement pour créer des zones de dilatation et/ou des zones de cambrure.

4. Procédé selon l'une quelconque des revendications 1 à 3, **caractérisé en ce que,** pour créer des avancées dans la pièce tridimensionnelle, un poinçon d'estampage attaque la zone d'échauffement, dont une au moins existe, la dimension dudit poinçon d'estampage, dans le sens du plan de la coupe de matériau, étant inférieure à la dimension de la zone d'échauffement.

5. Procédé selon l'une quelconque des revendications 1 à 4, **caractérisé en ce que** la température d'échauffement et/ou la largeur des zones d'échauffement le long de la ligne de déformation varient, de façon à mettre en forme de manière ciblée des arêtes qui se créent en fonction du type de la coupe de matériau à déformer ainsi que de l'épaisseur du matériau.

6. Procédé selon l'une quelconque des revendications 1 à 5, **caractérisé en ce que,** un refroidissement ciblé est réalisé pendant l'échauffement, à côté des zones d'échauffement, le long des lignes de déformation et/ou à côté des zones d'échauffement.

7. Procédé selon l'une quelconque des revendications 2 à 6, **caractérisé en ce que** la coupe de matériau est pliée au moins le long d'une ligne de pliure courbée, de façon à former sur la pièce mise en forme une surface cintrée.

8. Procédé selon l'une quelconque des revendications 1 à 7, **caractérisé en ce que,** au cours du pliage, une mise en forme à chaud est réalisée, au cours de laquelle des refoulements de matériau aux lignes de déformation formant des nervures de renforcement sont créés.

9. Procédé selon l'une quelconque des revendications 1 à 8, **caractérisé en ce que**, au moyen de la mise en forme à chaud, des dilatations de matériau formant des plis en U ou en omégas sont créées aux lignes de déformation.

10. Procédé selon l'une quelconque des revendications 1 à 9, **caractérisé en ce que** la coupe de matériau est pourvue sur une face ou sur les deux d'une structuration ou d'un profil de surface.

11. Procédé selon l'une quelconque des revendications 1 à 10, **caractérisé en ce que,** avant le chauffage et la déformation, des réservations ou une grille de réservations sont formées dans la coupe de matériau.

12. Procédé selon l'une quelconque des revendications 1 à 11, **caractérisé en ce que,** avant le chauffage et la déformation, des impressions ou des gravures sont effectuées sur la coupe de matériau.

13. Procédé selon l'une quelconque des revendications 1 à 12, **caractérisé en ce que,** avant le chauffage et la déformation, des modules sont disposés sur la coupe de matériau.

14. Corps mis en forme, fabriqué pour l'essentiel à partir d'une coupe de matériau (106 ; 206 ; 401 ; 501 ; 606 ; 706 ; 806 ; 906) d'un matériau synthétique thermoplastique, constitué en particulier, pour l'essentiel, d'un polyméthyméthacrylate (PMMA) homogène ou modifié, **caractérisé en ce que** par une mise en forme selon le procédé selon l'une quelconque des revendications 1 à 13, ses arêtes de pliure sont libres de marques d'outils et présentent un rayon correspondant à la conduite de la chaleur.

15. Corps mis en forme selon la revendication 14, **caractérisé en ce que** la coupe de matériau (106 ; 206 ; 401 ; 501 ; 606 ; 706 ; 806 ; 906) présente une épaisseur de matériau de 3 à 10 mm, de manière préférée, de 4 à 7 mm et en particulier de 6,5 mm.

16. Corps mis en forme selon la revendication 14 ou 15, **caractérisé par** une conformation en pochette de présentation pour accrochage à un rail perforé d'un système de présentation.

17. Corps mis en forme selon la revendication 14 ou 15, **caractérisé par** une conformation en meuble de présentation pour une présentation de marchandises promouvant les ventes, comportant au moins une surface de présentation (1102 ; 1202 ; 1302 ; 1402 ; 1502 ; 1602) et au moins une surface de maintien (1104 ; 1204 ; 1304 ; 1404 ; 1504 ; 1604) jouxtant la surface de présentation pour le positionnement de la surface de présentation (1102 ; 1202 ; 1302 ; 1402 ; 1502 ; 1602), la surface de présentation (1102 ; 1202 ; 1302 ; 1402 ; 1502 ; 1602) et la surface de maintien (1104 ; 1204 ; 1304 ; 1404 ; 1504 ; 1604) étant constituées de façon monobloc et par le pliage d'une coupe de matériau (1101 ; 1201 ; 1301 ; 1401 ; 1501 ; 1601) chauffée seulement le long d'au moins une ligne de pliure, décalées dans l'espace l'une par rapport à l'autre.

18. Corps mis en forme selon la revendication 17, **caractérisé en ce que**, deux lignes de pliure s'étendent entre les surfaces de présentation (1102 ; 1402) d'une première et d'une deuxième surface de maintien (1104, 1108, 1110 ; 1404, 1408, 1410), formées de manière monobloc l'une avec l'autre et décalées dans l'espace l'une par rapport à l'autre.

19. Corps mis en forme selon la revendication 17 ou 18, **caractérisé par** au moins deux montants (1116) écartés l'un de l'autre, entre lesquels s'étend au moins un plateau d'étagère (1100) présentant la surface de présentation (1102) et les surfaces de maintien (1104, 1108, 1110).

20. Corps mis en forme selon la revendication 19, **caractérisé en ce que** le plateau d'étagère (1100) est constitué d'une coupe de matériau (1101) essentiellement rectangulaire, pliée en forme de pupitre le long d'une première ligne de pliure (1106) s'étendant parallèlement à une des arêtes de matériau et le long d'autres lignes de pliure, de manière telle que la première ligne de pliure est subdivisée en trois sections dont la première et la troisième section sont disposées pour l'essentiel parallèlement l'une par rapport à l'autre et, par rapport à la deuxième section, comprennent chaque fois un angle pour l'essentiel droit.

21. Corps mis en forme selon la revendication 17 ou 18, **caractérisé par** un pied monobloc avec la surface de présentation (1202) et la surface de maintien (1204), formé par le pliage d'une coupe de matériau (1201) uniquement chauffée le long de lignes de pliure.

22. Corps mis en forme selon la revendication 17 ou 18, **caractérisé en ce que** quatre surfaces de maintien (1404, 1408, 1410) jouxtent une surface de présentation (1402) essentiellement rectangulaire, dont deux premières surfaces de maintien (1404) situées face à face par rapport à la surface de présentation (1402) s'étendent essentiellement en parallèle l'une par rapport à l'autre et forment des parois d'appui pour la surface de présentation (1402) disposée pour l'essentiel à angle droit par rapport aux premières surfaces de maintien, les premières surfaces de maintien (1404) étant reliées avec les deuxièmes surfaces de maintien (1408, 1410) restantes par les surfaces de liaison (1424) pour rigidification.

23. Corps mis en forme selon la revendication 17 ou 18, **caractérisé par** deux surfaces de présentation se jouxtant l'une l'autre, inclinées l'une vers l'autre.

24. Corps mis en forme selon la revendication 23, **caractérisé en ce que** les surfaces de présentation (1202) sont, en outre, chaque fois raccordées par des surfaces auxiliaires (1207), disposées latéralement, de coupe en forme de parallélogramme ou de trapèze, aux surfaces de maintien (1204) pour l'essentiel à angle droit par rapport aux surfaces de présentation (1202).

25. Corps mis en forme selon la revendication 17 ou 18, **caractérisé en ce que,** deux surfaces de maintien, formées symétriquement par rapport au plan central de la surface de présentation jouxtent la surface de présentation, l'angle de pliure, formé entre la surface de présentation et, chaque fois, une surface de maintien, étant réalisé de façon à être courbé, si bien que la surface de présentation est courbée de manière convexe et/ou concave.

26. Corps mis en forme selon l'une quelconque des revendications 17 à 25, **caractérisé en ce que** la coupe de matériau (1101 ; 1201 ; 1301 ; 1401 ; 1501 ; 1601) se constitue d'un matériau transparent et que, sur la face intérieure ou inférieure des surfaces de présentation et/ou de maintien, il est imprimé ou enduit sur une face.

27. Corps mis en forme selon la revendication 14 ou 15, **caractérisé par** une constitution en tant que capot de couverture pour la couverture d'une surface de présentation d'un meuble de présentation comportant au moins une surface de couverture (1840) et au moins une surface de maintien (1842, 1844, 1846, 1848) jouxtant la surface de couverture (1840), la surface de couverture (1840) et la surface de maintien (1842, 1844, 1846, 1848) étant constituées de façon monobloc et, par le pliage d'une coupe de matériau (1801) chauffée seulement le long de lignes de pliure, décalées dans l'espace l'une par rapport à l'autre.

28. Corps mis en forme selon la revendication 27, **caractérisé en ce que** deux surfaces de maintien (1842, 1844, 1846, 1848) constituées symétriquement par rapport au plan central de la surface de couverture (1840) jouxtent la surface de couverture (1840), l'angle de pliure, formé entre cette surface de couverture (1840) et, chaque fois, une surface de maintien (1842, 1844, 1846, 1848), étant réalisé de façon à être courbé, si bien que la surface de couverture (1840) est courbée de manière convexe et/ou concave.

29. Corps mis en forme selon la revendication 27 ou 28, **caractérisé en ce que** la coupe de matériau (1801) se constitue d'un matériau transparent, en particulier de polyméthyméthacrylate (PMMA), et que, sur la face intérieure ou inférieure des surfaces de couverture et/ou de maintien (1840, 1842, 1844, 1846, 1848), il est imprimé ou enduit sur une face.

30. Corps mis en forme selon la revendication 14 ou 15, **caractérisé par** une constitution en tant que pied pour le maintien d'un montant d'un meuble de présentation, comportant plusieurs surfaces de maintien (1730) se jouxtant les unes les autres et une ouverture de maintien de montant (1732) disposée au centre, les surfaces de maintien (1730) étant constituées de manière monobloc les unes aux autres et, par le pliage d'une coupe de matériau (1701) chauffée seulement le long de lignes de pliure, décalées dans l'espace les unes par rapport aux autres.

31. Corps mis en forme selon la revendication 30, **caractérisé en ce que,** la coupe de matériau (1701) se constitue d'un matériau transparent, en particulier de polyméthyméthacrylate (PMMA), et que sur la face intérieure ou inférieure des surfaces de maintien (1730), il est imprimé ou enduit sur une face.

32. Dispositif pour exécuter le procédé selon l'une quelconque des revendications 1 à 13, équipé d'un dispositif de chauffage (104 ; 240) pour le chauffage de coupes de matériau (106 ; 206 ; 401 ; 501 ; 606 ; 706 ; 806 ; 906) le long d'une ou de plusieurs lignes de déformation, d'au moins un dispositif de maintien pour l'immobilisation de la coupe de matériau (501) et d'au moins un dispositif de pliage pour le pliage de la coupe de matériau (501), **caractérisé en ce que** le dispositif de pliage présente plusieurs unités piston/cylindre (108 ; 208), dont les pistons pouvant entrer et sortir d'un cylindre comprennent des aspirateurs (110) disposés chaque fois de manière mobile pour engager des coupes de matériau (106), qui fonctionnent simultanément en tant que dispositifs de maintien.

33. Dispositif selon la revendication 32, **caractérisé en ce que** le dispositif de chauffage (104) peut être équipé de manière variable d'éléments chauffants semblables ou constitués différemment.

34. Dispositif selon la revendication 32 ou 33, **caractérisé en ce que** les unités piston/cylindre (108) sont logées de manière rotative autour d'une base.
